# EUROPEAN PATENT APPLICATION

(11) **EP 4 697 308 A1**
(43) Date of publication of application: **18.02.2026**
(21) Application number: 24838312.7
(22) Date of filing: 01.03.2024
(51) Int. Cl.: G09G 3/20, G06F 3/14

(54) **REFRESH RATE SWITCHING METHOD, ELECTRONIC DEVICE, AND COMPUTER READABLE STORAGE MEDIUM**

(30) Priority: 12.07.2023 CN 202310859376
(71) Applicant: Honor Device Co., Ltd., Shenzhen, Guangdong 518040 (CN)
(72) Inventor: YUE, Lingyan, Shenzhen, Guangdong 518040 (CN); HUANG, Changchang, Shenzhen, Guangdong 518040 (CN)
(74) Representative: Isarpatent
(86) International application number: PCT/CN2024/079725
(87) International publication number: WO 2025/011051

(57) **Abstract**

This application relates to the field of display technologies, and provides a refresh rate switching method, an electronic device, and a computer-readable storage medium. The method includes: controlling, by a display driver of the electronic device, a first DDIC to refresh an image to a first display based on a refresh rate of a first queue; receiving, by the display driver, a first refresh rate switching instruction, where a display frame rate of an APP displayed on the first display and/or a lowest refresh rate of the first display are/is carried in the first refresh rate switching instruction; configuring a second queue for the first DDIC based on the display frame rate and/or the lowest refresh rate that are/is carried in the first refresh rate switching instruction; and if the first queue is a first-type refresh rate queue and the second queue is a second-type refresh rate queue, controlling the first DDIC to refresh the image to the first display based on a refresh rate in the second queue before a non-skipping TE signal, and synchronously delivering an instruction to control a TE signal shielding function to be enabled. Therefore, a frame rate anomaly problem occurring when the first DDIC switches from the first-type refresh rate queue to the second-type refresh rate queue can be avoided.

## Description

This application claims priority to Chinese Patent Application No. 202310859376.7, filed with the China National Intellectual Property Administration on July 12, 2023 and entitled "REFRESH RATE SWITCHING METHOD, ELECTRONIC DEVICE, AND COMPUTER-READABLE STORAGE MEDIUM", which is incorporated herein by reference in its entirety.

### TECHNICAL FIELD

Embodiments of this application relate to the field of electronic device display technologies, and in particular, to a refresh rate switching method, an electronic device, and a computer-readable storage medium.

### BACKGROUND

With continuous development of display technologies of an electronic device (for example, a mobile phone), more and more displays that can support multiple refresh rates have emerged. For example, a display that uses a low temperature polycrystalline oxide (low temperature polycrystalline oxide, LTPO) screen technology can support multiple refresh rates such as 120 Hz, 90 Hz, 60 Hz, 40 Hz, 30 Hz, 10 Hz, and 1 Hz. A higher refresh rate of the display represents a higher display frame rate that can be supported by the display, and corresponding picture display is smoother. However, a lower refresh rate of the display can save more power consumption although a lower display frame rate can be supported. Therefore, to ensure a smooth picture and save specific power consumption as much as possible, an adaptive refresh rate technology has emerged in the conventional technology.

A principle of a conventional adaptive refresh rate technology is mainly to deliver a refresh rate switching instruction to a display driver integrated circuit (digital display indicator control, DDIC) based on a running scenario of an application (application, APP), so as to switch the refresh rate to an adapted refresh rate. Therefore, the adaptive refresh rate technology cannot be adapted to a case in which the running scenario cannot be distinguished, and thus the refresh rate of the DDIC cannot be reduced in a case that the running scenario cannot be distinguished, thereby resulting in an increase in unnecessary power consumption.

To solve this problem, a new adaptive refresh rate method occurs in the conventional technology. However, in the adaptive refresh rate method, a frame rate anomaly problem is caused due to improper switching timing when a refresh rate of a DDIC is switched.

### SUMMARY

Embodiments of this application provide a refresh rate switching method, an electronic device, and a computer-readable storage medium, so as to solve a frame rate anomaly problem caused by improper switching timing when a refresh rate of a DDIC is switched according to an adaptive refresh rate technology.

To achieve the objective, following technical solutions are used in the embodiments of this application.

According to a first aspect, a refresh rate switching method is provided. The method is applied to an electronic device. The electronic device includes a first display, and a first display driver integrated circuit corresponding to the first display. In the method, a display driver of the electronic device may control the first display driver integrated circuit to refresh an image to the first display based on a refresh rate of a first queue. The first queue may be a first-type refresh rate queue, or may be a second-type refresh rate queue. The first-type refresh rate queue is a refresh rate queue that includes at least two refresh rates distributed from high to low. The second-type refresh rate queue is a refresh rate queue in which a last refresh rate has a refresh rate value and a refresh rate before the last refresh rate is null.

In a process in which the first display driver integrated circuit refreshes the image to the first display based on the refresh rate of the first queue, a display frame rate of an APP on the first display and/or a lowest refresh rate of the first display may change. In this case, the display driver of the electronic device may receive a first refresh rate switching instruction. The display frame rate of the APP displayed on the first display and/or the lowest refresh rate of the first display are carried in the first refresh rate switching instruction. Then, the display driver may configure a second queue for the first display driver integrated circuit based on the display frame rate and/or the lowest refresh rate that are/is carried in the first refresh rate switching instruction. The second queue may be a first-type refresh rate queue, or may be a second-type refresh rate queue.

The display driver may control, based on queue types of the first queue and the second queue, the first display driver to refresh the image to the first display based on different refresh rates. Specifically, if the first queue is the first-type refresh rate queue and the second queue is the second-type refresh rate queue, the display driver may control the first display driver integrated circuit to refresh the image to the first display based on a refresh rate in the second queue before a non-skipping TE signal, and synchronously deliver the instruction to control a TE signal shielding function to be enabled. The non-skipping TE signal is a TE signal reported to an SF.

It may be learned that if the first queue is the first-type refresh rate queue and the second queue is the second-type refresh rate queue, the second-type refresh rate queue is switched from the first-type refresh rate queue is switched. Then, the display driver needs to control a TE MASK function of the first DDIC to be switched from disabled to enabled. However, because the first DDIC is a DDIC with the TEI function, the TE MASK function thereof needs to take effect by using one TE signal. Thus, a next non-skipping TE signal that corresponds to the skipping TE signal and originally does not need to be skipped but should be reported may be shielded, thereby causing the frame rate anomaly problem. Therefore, switching before the non-skipping TE signal may avoid the frame rate anomaly problem when the first DDIC switches from the first-type refresh rate queue to the second-type refresh rate queue.

In a possible implementation of the first aspect, the refresh rate switching method further includes: if the first queue is the second-type refresh rate queue and the second queue is the first-type refresh rate queue, in a penultimate period of a refresh rate currently used for refreshing the image by the first display driver integrated circuit, controlling, by the display driver, the first display driver integrated circuit to refresh the image to the first display based on the refresh rate in the second queue, and synchronously delivering the instruction to control the TE signal shielding function to be disabled and control a TEI function to be initialized.

Because switching the first-type refresh rate queue from the second-type refresh rate queue is not completed in the penultimate period of the refresh rate currently used for refreshing the image, the switched first-type refresh rate queue may have an additional abnormal frame of 8.3 ms because the TE signal needs to be started for the TEI. In this way, frame slicing is completed in the penultimate period, so that the frame rate anomaly problem when switching the first-type refresh rate queue from the second-type refresh rate queue in the first DDIC can be avoided.

In a possible implementation of the first aspect, the refresh rate switching method further includes: if the first queue is the first-type refresh rate queue and the second queue is the first-type refresh rate queue, when controlling the first display driver integrated circuit to refresh the image to the first display based on the refresh rate in the second queue, not synchronously delivering, by the display driver, an instruction to the TE signal shielding function and the TEI function of the first display driver integrated circuit. Refresh rate queues of the same type may be switched without controlling the TE MASK function and the TEI function. However, the TEI function implements TE skipping by counting with a register. Therefore, when switching of the refresh rate queues exists, it is necessary to initialize the TEI function register and start to recount for TE skipping. Therefore, in a case of switching the first refresh rate queue from the first-type refresh rate queue in the first DDIC, initialization of the TEI function may occur, resulting in an additional abnormal frame rate of 8.3 ms. Therefore, when the first-type refresh rate queue is switched from the first-type refresh rate queue, the instruction is not given to the TEI, so that the frame rate anomaly problem can be avoided.

In a possible implementation of the first aspect, the method further includes: if the first queue is the first-type refresh rate queue and the second queue is the first-type refresh rate queue, when controlling the first display driver integrated circuit to refresh the image to the first display based on the refresh rate in the second queue, not synchronously delivering, by the display driver, an instruction to the TE signal shielding function and the TEI function of the first display driver integrated circuit. The method includes:
if the first queue is the first-type refresh rate queue and the second queue is the first-type refresh rate queue, after determining that the first queue and the second queue are not the same, controlling, by the display driver, the first display driver integrated circuit to refresh the image to the first display based on the refresh rate in the second queue, and not synchronously delivering the instruction to the TE signal shielding function and the TEI function of the first display driver integrated circuit.

The electronic device may include one display (namely, a first display), or may include a plurality of displays (namely, a first display and a second display). For example, the electronic device may be a foldable screen device (such as a foldable screen mobile phone). The foldable screen mobile phone may include an inner screen and an outer screen that are foldable, or the foldable screen mobile phone may include two inner screens.

In a possible implementation of the first aspect, the electronic device further includes a second display, and a second display driver integrated circuit corresponding to the second display. In the method, the display driver of the electronic device controls the second display driver integrated circuit to refresh the image to the second display based on a refresh rate in a third queue. The third queue may be the first-type refresh rate queue or the second-type refresh rate queue.

In a process in which the second display driver integrated circuit refreshes the image to the second display based on the refresh rate of the third queue, a display frame rate of an APP on the second display and/or a lowest refresh rate of the second display may change. In this case, the display driver of the electronic device may receive a second refresh rate switching instruction. The display frame rate of the APP displayed on the second display and/or the lowest refresh rate of the second display are carried in the second refresh rate switching instruction. Then, the display driver may configure a fourth queue for the second display driver integrated circuit based on the display frame rate and/or the lowest refresh rate that are/is carried in the second refresh rate switching instruction. The fourth queue may be a first-type refresh rate queue or a second-type refresh rate queue.

Similarly, the display driver may control, based on queue types of the third queue and the fourth queue, the second display driver to refresh the image to the second display based on different refresh rates. Specifically, if the third queue is the first-type refresh rate queue and the fourth queue is the second-type refresh rate queue, after controlling the second display driver integrated circuit to refresh a frame of image to the second display based on a 120 Hz refresh rate, the display driver controls the second display driver integrated circuit to refresh the image to the second display based on a refresh rate in the fourth queue, and synchronously delivers the instruction to control the TE signal shielding function to be enabled.

For a reason that control of a TE signal shielding function of a second DDIC takes effect immediately, if the display driver, regardless of timing, delivers the switching instruction to the second DDIC in the first two periods of the refresh rate currently used for refreshing the image by the second DDIC to control the second DDIC to switch from the first-type refresh rate queue to the second-type refresh rate queue, it is likely that a TE signal that should be reported later is shielded and cannot be reported, thereby causing a frame rate anomaly. Therefore, after the 120 Hz refresh rate is switched first, the second-type refresh rate queue is switched from the first-type refresh rate queue, so that the frame rate anomaly problem can be avoided.

In a possible implementation of the first aspect, the refresh rate switching method further includes: if the third queue is the second-type refresh rate queue and the fourth queue is the first-type refresh rate queue, in a last period of a refresh rate currently used for refreshing the image by the second display driver integrated circuit, controlling, by the display driver, the second display driver integrated circuit to refresh the image to the first display based on the refresh rate in the fourth queue, and synchronously delivering the instruction to control the TE signal shielding function to be disabled and report the TE signal generated by the second display driver integrated circuit to the SF based on an actual operating frame rate of the SF.

For a reason that the TE MASK function takes effect immediately, if the switching instruction of the display driver is not delivered to the last period of the refresh rate currently used for refreshing the image by the second DDIC, an originally shielded skipping TE signal is immediately generated and reported to an upper layer. In this case, when the upper layer responds to the TE signal to send the image, a period corresponding to the refresh rate currently used for refreshing the image by the second DDIC is not completed, and the frame rate anomaly occurs. Therefore, in the last period, the first-type refresh rate queue is switched from the second-type refresh rate queue, so that the frame rate anomaly problem when switching the first-type refresh rate queue from the second-type refresh rate queue in the second DDIC can be avoided.

In a possible implementation of the first aspect, the first display driver integrated circuit may be a display driver integrated circuit with the TEI function.

In a possible implementation of the first aspect, the second display driver integrated circuit may be a display driver integrated circuit without the TEI function.

According to a second aspect, this application provides an electronic device. The electronic device includes a memory, a first display, a first display driver integrated circuit, and one or more processors. The memory, the first display, and the first display driver integrated circuit are coupled to the processor. The memory stores one or more computer program codes, the computer program code including a computer instruction. When the processor executes the computer instruction, the electronic device is enabled to perform the following steps:
controlling, by a display driver of the electronic device, the first display driver integrated circuit to refresh an image to the first display based on a refresh rate of a first queue; where the first queue is a first-type refresh rate queue or a second-type refresh rate queue, the first-type refresh rate queue is a refresh rate queue that includes at least two refresh rates distributed from high to low, and the second-type refresh rate queue is a refresh rate queue in which a last refresh rate has a refresh rate value and a refresh rate before the last refresh rate is null; receiving, by the display driver of the electronic device, a first refresh rate switching instruction, where a display frame rate of an APP displayed on the first display and/or a lowest refresh rate of the first display are/is carried in the first refresh rate switching instruction; configuring a second queue for the first display driver integrated circuit based on the display frame rate and/or the lowest refresh rate that are/is carried in the first refresh rate switching instruction; where the second queue is the first-type refresh rate queue or the second-type refresh rate queue; and if the first queue is the first-type refresh rate queue and the second queue is the second-type refresh rate queue, controlling the first display driver integrated circuit to refresh the image to the first display based on a refresh rate in the second queue before a non-skipping TE signal, and synchronously delivering the instruction to control a TE signal shielding function to be enabled; where the non-skipping TE signal is a TE signal reported to an SF. The display driver may be a software code or a software module running in the processor.

In a possible implementation of the second aspect, when the computer instruction is executed by the processor, the electronic device is enabled to further perform the following steps: if the first queue is the second-type refresh rate queue and the second queue is the first-type refresh rate queue, in a penultimate period of a refresh rate currently used for refreshing the image by the first display driver integrated circuit, controlling, by the display driver, the first display driver integrated circuit to refresh the image to the first display based on the refresh rate in the second queue, and synchronously delivering the instruction to control the TE signal shielding function to be disabled and control a TEI function to be initialized.

In a possible implementation of the second aspect, when the computer instruction is executed by the processor, the electronic device is enabled to further perform the following steps: if the first queue is the first-type refresh rate queue and the second queue is the first-type refresh rate queue, when controlling the first display driver integrated circuit to refresh the image to the first display based on the refresh rate in the second queue, not synchronously delivering, by the display driver, an instruction to the TE signal shielding function and the TEI function of the first display driver integrated circuit.

In a possible implementation of the second aspect, when the computer instruction is executed by the processor, the electronic device is enabled to further perform the following steps: if the first queue is the first-type refresh rate queue and the second queue is the first-type refresh rate queue, after determining that the first queue and the second queue are not the same, controlling, by the display driver, the first display driver integrated circuit to refresh the image to the first display based on the refresh rate in the second queue, and not synchronously delivering the instruction to the TE signal shielding function and the TEI function of the first display driver integrated circuit.

In a possible implementation of the second aspect, the electronic device further includes a second display, and a second display driver integrated circuit corresponding to the second display. The second display and the second display driver integrated circuit are coupled to the processor. When the computer instruction is executed by the processor, the electronic device is enabled to further perform the following steps: controlling, by the display driver of the electronic device, the second display driver integrated circuit to refresh the image to the second display based on a refresh rate in a third queue; receiving, by the display driver of the electronic device, a second refresh rate switching instruction, where a display frame rate of an APP displayed on the second display and/or a lowest refresh rate of the second display are/is carried in the second refresh rate switching instruction; configuring a fourth queue for the second display driver integrated circuit based on the display frame rate and/or the lowest refresh rate that are/is carried in the second refresh rate switching instruction; and if the third queue is the first-type refresh rate queue and the fourth queue is the second-type refresh rate queue, after controlling the second display driver integrated circuit to refresh a frame of image to the second display based on a 120 Hz refresh rate, controlling the second display driver integrated circuit to refresh the image to the second display based on a refresh rate in the fourth queue, and synchronously delivering the instruction to control the TE signal shielding function to be enabled.

In a possible implementation of the second aspect, when the computer instruction is executed by the processor, the electronic device is enabled to further perform the following steps: if the third queue is the second-type refresh rate queue and the fourth queue is the first-type refresh rate queue, in a last period of a refresh rate currently used for refreshing the image by the second display driver integrated circuit, controlling, by the display driver, the second display driver integrated circuit to refresh the image to the first display based on the refresh rate in the fourth queue, and synchronously delivering the instruction to control the TE signal shielding function to be disabled and report the TE signal generated by the second display driver integrated circuit to the SF based on an actual operating frame rate of the SF.

In a possible implementation of the second aspect, the first display driver integrated circuit is a display driver integrated circuit with the TEI function.

In a possible implementation of the second aspect, the second display driver integrated circuit is a display driver integrated circuit without the TEI function.

According to a third aspect, this application provides a computer-readable storage medium. The computer-readable storage medium stores a computer program thereon. When the computer program is executed by a processor of an electronic device, the electronic device is enabled to perform the refresh rate switching method according to the first aspect and any one of possible design manners thereof.

According to a fourth aspect, this application provides a computer program product. When the computer program product is running on a computer, the computer is enabled to perform the method according to the first aspect and any one of possible design manners thereof. The computer may be the electronic device.

It may be understood that, for beneficial effects that can be achieved by the electronic device according to the second aspect and any one of possible design manners thereof, the computer-readable storage medium according to the third aspect, and the computer program product according to the fourth aspect, refer to the beneficial effects in the first aspect and any one of possible design manners thereof. Details are not described herein again.

### BRIEF DESCRIPTION OF DRAWINGS

FIG. 1 is a schematic diagram of image refreshing manners corresponding to refresh rates according to an embodiment of this application;
FIG. 2 is a schematic diagram of an interface of a video scenario with a bullet-screen comment according to an embodiment of this application;
FIG. 3 is a schematic diagram of an interface of a video scenario without a bullet-screen comment according to an embodiment of this application;
FIG. 4 is a schematic diagram of a DDIC that refreshes an image repeatedly according to an embodiment of this application;
FIG. 5 is a schematic structural diagram of an electronic device according to an embodiment of this application;
FIG. 6 is a block diagram of a software structure of an electronic device according to an embodiment of this application;
FIG. 7 is a first schematic flowchart of a refresh rate switching method according to an embodiment of this application;
FIG. 8 is a first schematic diagram of refresh rate switching with a frame rate anomaly according to an embodiment of this application;
FIG. 9 is a first schematic diagram of refresh rate switching without a frame rate anomaly according to an embodiment of this application;
FIG. 10 is a second schematic diagram of refresh rate switching with a frame rate anomaly according to an embodiment of this application;
FIG. 11 is a third schematic diagram of refresh rate switching with a frame rate anomaly according to an embodiment of this application;
FIG. 12 is a second schematic diagram of refresh rate switching without a frame rate anomaly according to an embodiment of this application;
FIG. 13 is a second schematic flowchart of a refresh rate switching method according to an embodiment of this application;
FIG. 14 is a fourth schematic diagram of refresh rate switching with a frame rate anomaly according to an embodiment of this application;
FIG. 15 is a third schematic diagram of refresh rate switching without a frame rate anomaly according to an embodiment of this application;
FIG. 16 is a fifth schematic diagram of refresh rate switching with a frame rate anomaly according to an embodiment of this application;
FIG. 17 is a fourth schematic diagram of refresh rate switching without a frame rate anomaly according to an embodiment of this application;
FIG. 18 is a third schematic flowchart of a refresh rate switching method according to an embodiment of this application; and
FIG. 19 is a schematic diagram of a chip system according to an embodiment of this application.

### DESCRIPTION OF EMBODIMENTS

To clearly describe the technical solutions in embodiments of this application, the following briefly describes and explains some terms and technologies in the embodiments of this application.

A frame rate (frame rate), also referred to as a frame rate, is a rate at which bitmap images in a unit of frame (Frame) are continuously displayed on a display, generally in a unit of frame per second (frame per second, FPS).

A refresh rate is a quantity of times that a picture on a screen is refreshed per second, alternatively referred to as a frame rate of a display in a unit of Hz. For example, a 60 Hz refresh rate means that the display can refresh and display the picture 60 times within 1 second. That is, the refresh rate is a hardware performance parameter of the display of an electronic device, and is used to represent the quantity of times that the picture of the display can be refreshed and displayed per second.

A display frame rate of an application is a speed at which the application draws the picture (namely, image data). The display frame rate of the application usually may be represented by using a quantity of transmitted frames per second (frame per second, fps) of the picture. That is, the display frame rate of the application refers to a rate at which the application outputs the image data to the display.

A tearing effect (tearing effect, TE) signal is a signal that is generated by a DDIC and used to prevent a tearing phenomenon when the picture is refreshed in an image display process. The tearing phenomenon refers to a phenomenon that a part of each of a new picture and an old picture is displayed when the picture is refreshed.

An adaptive refresh rate technology refers to dynamically adjusting a refresh rate of a screen based on a use scenario (a running scenario of the APP) and a requirement of a user.

Image sending means that an application processor (application processor, AP) side writes drawn and rendered to-be-displayed image data into a random access memory (random access memory, RAM) of the DDIC by using a layer synthesis service (surface flinger, SF).

Image refreshing means that the DDIC reads the to-be-displayed image data from the RAM based on a refresh rate to be refreshed and displayed to a corresponding display.

The following clearly and completely describes the technical solutions in the embodiments of this application with reference to the accompanying drawings in the embodiments of this application. In description of the embodiments of this application, terms used in the following embodiments are merely intended to describe particular embodiments, and are not intended to limit this application. In addition, for ease of clearly describing the technical solutions in the embodiments of this application, in the embodiments of this application, words such as "first" and "second" are used to distinguish same items or similar items whose functions and roles are basically the same. A person skilled in the art may understand that the words such as "first" and "second" do not limit a quantity or an execution queue, and the words such as "first" and "second" do not indicate a definite difference. In the descriptions of the embodiments of this application, unless otherwise specified, "a plurality of" means two or more.

With continuous development of display technologies of an electronic device (for example, a mobile phone), more and more displays that can support multiple refresh rates have emerged. For example, a display that uses a low temperature polycrystalline oxide (low temperature polycrystalline oxide, LTPO) screen technology may support multiple refresh rates such as 120 Hz, 90 Hz, 60 Hz, 40 Hz, 30 Hz, 10 Hz, and 1 Hz. 120 Hz and 90 Hz are base frequencies of an LTPO, and other refresh rates that can be supported are generated in a frameskip (frameskip) manner based on 120 Hz, so that a 1 Hz refresh rate can be achieved at least.

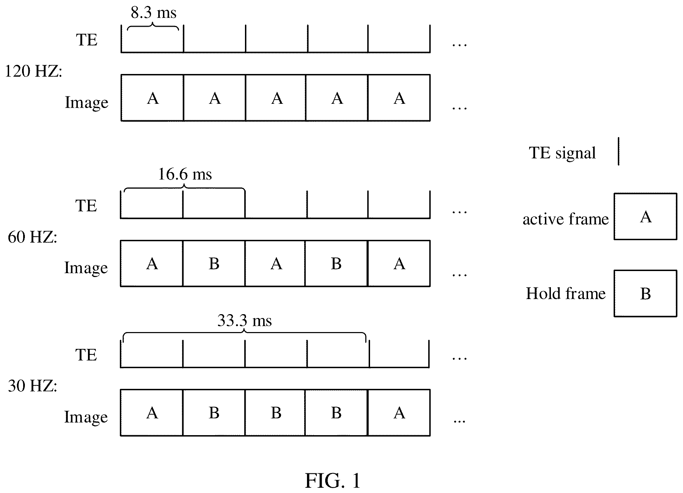

For example, the 120 Hz refresh rate indicates that the image on the display can be refreshed 120 times within 1 second. Therefore, 120 Hz means that a frame of image is refreshed in a period of 8.3 ms (milliseconds), and the image in each period is an active (active) frame. Refer to a diagram corresponding to 120 Hz in FIG. 1. The active frame may be understood as an image frame sent by the upper-layer SF to the lower-layer DDIC.

In this case, a principle of achieving a 60 Hz refresh rate based on 120 Hz is that 8.3 ms is also used as a period, but each active frame is followed by one hold frame. The hold frame means that the DDIC keeps one frame not to be refreshed after one active frame is refreshed. It may be understood that there is no corresponding image content in the hold frame. That is, at the 60 Hz refresh rate, one active frame is available every 16.6 milliseconds. Refer to a diagram corresponding to 60 Hz in FIG. 1. It may be learned that, compared with refreshing one active frame in one period of 8.3 ms, the DDIC implements frameskip by refreshing one frame of image and stopping one frame of image (commonly referred to as scan 1 and skip 1), so that an image refreshing time interval between two active frames is increased by half, thereby implementing a purpose of the 60 Hz refresh rate on the basis of 120 Hz.

Similarly, it may be learned that to implement 30 Hz on the basis of 120 Hz is to follow three hold frames by each active frame, which is commonly referred to as scan 1 and skip 3. Refer to a diagram corresponding to 30 Hz in FIG. 1. However, to implement 10 Hz on the basis of 120 Hz is to follow eleven hold frames by each active frame, which is commonly referred to as scan 1 and skip 11. To implement 1 Hz on the basis of 120 Hz is to follow 119 hold frames by each active frame, which is commonly referred to as scan 1 and skip 119.

A higher refresh rate of the display represents a higher display frame rate that can be supported by the display, and corresponding picture display is smoother. However, a lower refresh rate of the display can save more power consumption although a lower display frame rate can be supported. Therefore, to ensure a smooth picture and save specific power consumption as much as possible, an adaptive refresh rate technology has emerged in the conventional technology.

That is, generally in a process of running a high-frame-rate application or a sliding operation, the display is adaptively set to a high refresh rate by delivering a refresh rate switching instruction to the DDIC. On the contrary, in a process of running a low-frame-rate application, the display is adaptively set to a low refresh rate by delivering a refresh rate switching instruction to the DDIC.

For example, if it is detected that a current running scenario of the APP in the electronic device is a high-frame-rate game scenario or a fast sliding scenario, to improve smoothness of a game picture or picture sliding, a display driver (display driver) delivers the refresh rate switching instruction to the DDIC to switch the refresh rate of the display to a high refresh rate that may be matched with the high-frame-rate game scenario or the fast sliding scenario. Assuming that a current refresh rate of the display is 60 Hz, when it is detected that the running scenario of the APP has changed and the refresh rate needs to be increased (for example, a high-frame-rate game is run), the display driver may deliver the refresh rate switching instruction to the DDIC to switch the refresh rate to 120 Hz. However, when it is detected that the running scenario of the APP has changed and the refresh rate needs to be reduced (for example, the high-frame-rate game is exited), the display driver may deliver the refresh rate switching instruction again to the DDIC to switch the refresh rate from 120 Hz to 60 Hz.

It may be learned that, compared with a previous display that can only support one refresh rate, a display that can support multiple refresh rates may adapt to running scenarios of more APPs based on an actual application situation, thereby ensuring the smooth picture and achieving a purpose of saving power consumption.

However, most APPs are developed by a third party at present, and are configured to run in the electronic device in download and installation manners. Therefore, there is a problem of adaptability between the electronic device and the APPs. In a case of high adaptability, an upper layer of the electronic device can well distinguish a running scenario of the APP, and thus can directly deliver, based on the running scenario, the refresh rate switching instruction to control a lower-layer DDIC to switch to the refresh rate matched with the running scenario, thereby achieving the adaptive refresh rate technology.

However, in a case of low adaptability between the electronic device and the APP, there may be a problem that the upper layer of the electronic device cannot well distinguish the running scenario of the APP, and thus cannot accurately deliver, based on the running scenario, the refresh rate switching instruction to the lower-layer DDIC to switch to the refresh rate matched with the running scenario, resulting in an increase in power consumption. That is, a conventional adaptive refresh rate technology cannot be adapted to a case in which the running scenario cannot be distinguished, and thus the refresh rate of the DDIC cannot be reduced in a case that the running scenario cannot be distinguished, thereby resulting in an increase in unnecessary power consumption.

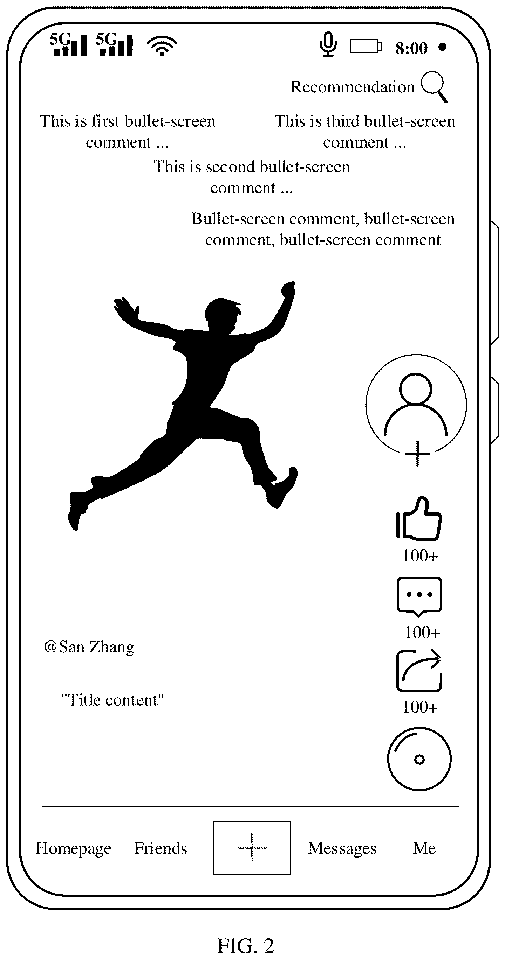

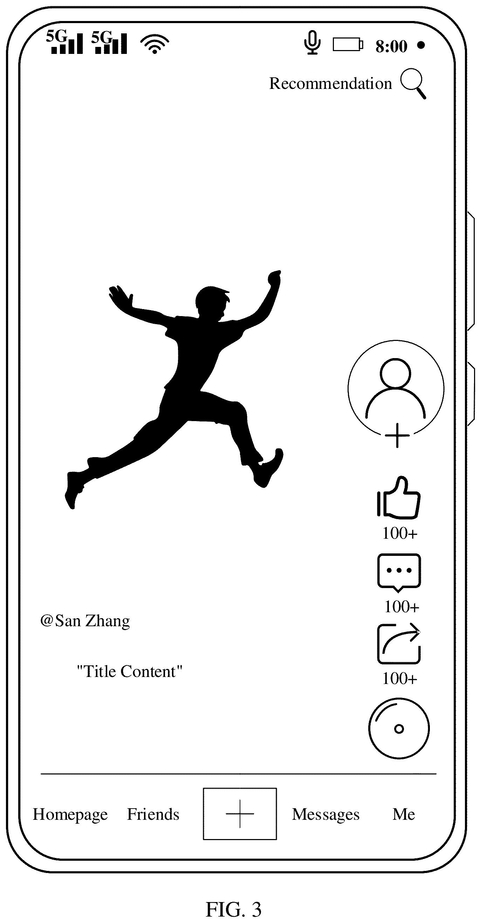

For example, a short video APP with a bullet-screen function is used as an example. If the short video APP is in a video play scenario with a bullet-screen comment, referring to FIG. 2, to ensure smoothness of the bullet-screen comment, the display frame rate required by the APP is generally 60 Hz. Correspondingly, the refresh rate of the display can be adapted to 60 Hz to synchronously maintain smoothness of operation display of the bullet-screen comment. However, in a video play scenario without the bullet-screen comment, referring to FIG. 3, to reduce power consumption, the display frame rate of the APP is generally adapted to 30 Hz to ensure smoothness of video playback. Therefore, when the running scenario in the short video APP is switched from a video with the bullet-screen comment to a video without the bullet-screen comment, an SF module on an AP side may reduce a drawing rate to 30 Hz based on the display frame rate of 30 Hz required by the short video APP. However, because of a background adaptability problem, the electronic device and the short video APP cannot well distinguish whether a current video scenario has the bullet-screen comment or not. Therefore, it is not possible to accurately deliver the refresh rate switching instruction for switching to the 30 Hz refresh rate to the lower-layer DDIC when the running scenario of the short video APP is switched to the video without the bullet-screen comment. As a result, after the drawing rate of the upper-layer SF has been reduced to 30 Hz so that an image sending frequency is correspondingly reduced to 30 Hz, the lower-layer DDIC still refreshes the image at a 60 Hz refresh rate, thereby increasing unnecessary power consumption.

The following describes the problems in combination with image drawing and image sending of the SF, and an image refreshing process of the DDIC.

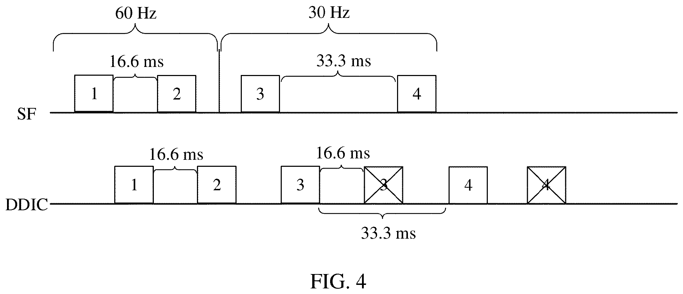

Referring to FIG. 4, rectangles marked with numbers 1, 2, 3, and 4 respectively represent a first frame of image, a second frame of image, a third frame of image, and a fourth frame of image. The first frame of image and the second frame of image are images drawn at the 60 Hz display frame rate (corresponding to the video scenario with the bullet-screen comment of the short video APP). That is, in the two frames of images, namely the first frame of image and the second frame of image, time intervals between image drawing and image sending, and time intervals between image refreshing and image displaying are all two periods of 16.6 ms. When the short video APP is switched to the video scenario without the bullet-screen comment, the SF reduces the drawing rate to 30 Hz for a requirement of the 30 Hz display frame rate required by the video scenario without the bullet-screen comment, and completes image drawing and image sending of the third frame of image and the fourth frame of image based on the 30 Hz rate. That is, in the two frames of images, namely the third frame of image and the fourth frame of image, time intervals between image drawing and image sending, and time intervals between image refreshing and image displaying, are all four periods of 33.3 ms. However, because the upper layer of the electronic device cannot distinguish the scenario to deliver the instruction for switching to the 30 Hz refresh rate to the DDIC, the DDIC still uses the 60 Hz refresh rate to refresh the image. Therefore, in a gap in which the upper-layer SF does not send the image, no new image (active frame) is transmitted, thereby, in a case that the DDIC repeatedly refreshes the third frame of image and the fourth frame of image (rectangles with diagonal lines shown in the figure), increasing unnecessary power consumption.

To solve a problem of the increase in unnecessary power consumption since the running scenario of the APP cannot be distinguished and the refresh rate switching instruction cannot be accurately delivered to the DDIC to reduce the refresh rate, a new adaptive refresh rate method occurs, and an image display method is proposed based on the new adaptive refresh rate method.

A main implementation principle of the image display method is as follows: the upper layer of the electronic device is configured to dynamically configure, based on a data structure used to configure a refresh rate queue (sequeue, SEQ) in the DDIC, the refresh rate queue SEQ for the DDIC based on the display frame rate of the APP displayed on the display and the lowest refresh rate of the display. The refresh rate queue may be a first-type refresh rate queue that has refresh rates distributed from high to low or a second-type refresh rate queue in which a last refresh rate is equal to a display frame rate and refresh rates before the last refresh rate are all null. Then, when the display driver controls the DDIC to refresh the image to the display based on the configured first-type refresh rate queue, the display driver delivers, based on an image sending frequency of the SF module on the upper-layer AP side, the refresh rate switching instruction to the DDIC to control the DDIC to switch the refresh rate in the configured first-type refresh rate queue. When switching from a high refresh rate to a low refresh rate based on the image sending frequency, the DDIC implements an adaptive reduction in the refresh rate, thereby achieving an effect of reducing unnecessary power consumption.

Specifically, SEQ may be understood as a functional module that is provided for a user to configure the refresh rate in the DDIC. Based on a type of the DDIC, a queue thereof can support different lengths. That is, a length of the refresh rate queue SEQ configured for the DDIC depends on the type of the DDIC.

For example, two types of DDIC, such as Model 37900 and Model 37701A, which are currently most commonly used by the electronic device, are used as an example. The DDIC of Model 37900 is a DDIC with a tearing interposition (tearing interposition, TEI) function (hereinafter referred to as a first DDIC), and a queue length that can be supported by the DDIC is 5. That is, a refresh rate queue SEQ of the first DDIC may include five queue values, which is equivalent to SEQ of the first DDIC being equal to [SEQ1, SEQ2, SEQ3, SEQ4, SEQ5]. Whereas, the DDIC of Model 37701A is a DDIC without a tearing interposition (tearing interposition, TEI) function (hereinafter referred to as a second DDIC), and a queue length that can be supported by the DDIC is 4. That is, SEQ in the second DDIC may include four queue values, which is equivalent to SEQ of the second DDIC being equal to [SEQ1, SEQ2, SEQ3, SEQ4].

For example, the electronic device is a mobile phone. For a mobile phone with only a single display, the display may apply the DDIC of Model 37701A or apply the DDIC of Model 37900 based on an actual requirement. Whereas, for a mobile phone that includes two displays, for example, a foldable mobile phone, the first DDIC and/or the second DDIC may be selectively applied based on different requirements of an inner display (a display of the foldable mobile phone in an unfolded state for the user to operate) and an outer display (a display of the foldable mobile phone in a folded state for the user to operate). For example, at present, the DDIC of Model 37900 is generally applied to the inner display, and the DDIC of Model 37701A is generally applied to the outer display.

Each queue value (such as SEQi, i being equal to 1, 2...n, and n being equal to 4 or n being equal to 5) in the refresh rate queue SEQ may be set to different refresh rates, and different refresh rates correspond to different image refreshing manners. Image refreshing of the DDIC based on the SEQ means that image refreshing of the DDIC based on the image refreshing manner of the refresh rate corresponding to the SEQ, which is equivalent to the DDIC working at the refresh rate. For example, if a certain queue value in the SEQ of the DDIC is set to a 60 Hz refresh rate, when the DDIC works based on the queue value of 60 Hz, the DDIC refreshes the image in a manner of scanning one and skipping one, thereby implementing the 60 Hz refresh rate. Whereas, if the queue value in the SEQ is set to 30 Hz, when the DDIC works based on the queue value of 30 Hz, the DDIC refreshes the image in a manner of scanning one and skipping three, thereby implementing the refresh rate of 30 Hz. In addition, each SEQi in the refresh rate queue SEQ may be switched based on an enqueuing order. In addition, it is restricted in the DDIC that each refresh rate SEQi in the refresh rate queue SEQ can only be switched in queue based on a queuing queue. It is also restricted that skipping switching is not allowed, but direct switching to SEQ1 is allowed. That is, the DDIC can only switch from SEQ1 to SEQ2 and from SEQ2 to SEQ3, but cannot switch directly from SEQ1 to SEQ3 or from SEQ3 to SEQ1. However, it is possible to switch directly from SEQ3 or SEQ2 to SEQ1.

Based on this, to implement adaptive reduction of the refresh rate and save unnecessary power consumption in a case that the running scenario cannot be distinguished, the image display method configures, by means of dynamic configuration, a refresh rate queue SEQ that has refresh rates distributed from high to low for the DDIC. For example, a first refresh rate SEQ1 in the refresh rate queue SEQ is set to a high refresh rate, and other refresh rates are set to low refresh rates lower than the first refresh rate SEQ1.

For example, the SEQ of the first DDIC is used as an example, that is, SEQ1 is set to a high refresh rate, and SEQ2, SEQ3, SEQ4, and SEQ5 are set to low refresh rates. For example, SEQ1 is set to 60 Hz, and SEQ2, SEQ3, SEQ4, and SEQ5 are set to 30 Hz.

Then, the DDIC refreshes the image for the refresh rate queue SEQ configured by the upper-layer application based on the running scenario of the upper-layer application. An image refreshing process is as follows: the DDIC first works in a manner of refreshing the image corresponding to the first refresh rate SEQ1 in the queue. While refreshing the image, the display driver judges whether the image is stably sent to the upper layer based on a TE signal generated by the DDIC and reported to the upper-layer SF.

In a display technology, generally, when one TE signal is reported to the DDIC, a frame of image is sent from the upper layer. Therefore, if no corresponding image is obtained after the TE signal is reported, it indicates that the SF module may reduce a speed of drawing and sending the image based on the display frame rate of the running scenario of the APP (for example, in a case that the display frame rate required by the APP is reduced from 60 Hz to 30 Hz after operation of the bullet-screen comment is completed or the bullet-screen comment is closed). That is, the upper-layer SF currently does not need to send a new image for display, and therefore does not respond to the TE signal reported by to DDIC to implement image sending. In this case, if the DDIC still works based on the refresh rate corresponding to SEQ1, a repeated image refreshing phenomenon occurs, thereby resulting in a problem of increasing unnecessary power consumption.

Therefore, in a case that the display driver determines, based on the TE signal, that the upper-layer SF does not send the image, the display driver controls the DDIC to switch to a next refresh rate based on a rank order of the refresh rates SEQi in the refresh rate queue SEQ, for example, switching from SEQ1 to SEQ2. Then the DDIC refreshes the image based on the refresh rate of current switching, that is, if switching is currently performed to a SEQi, a refresh rate corresponding to the SEQi is used to refresh the image.

SEQ2, SEQ3, SEQ4, and SEQ5 are also switched in the same manner in a case that it is determined that the upper-layer SF does not send the image, and after switching to the last SEQ4 or SEQ5, the DDIC keeps refreshing the image at a refresh rate corresponding to the last SEQ4 or SEQ5.

However, after the refresh rate of the DDIC is reduced, a quantity of hold frames that the DDIC refreshes the image is increased. In addition, once the upper-layer SF recovers image sending, the upper-layer SF still sends the image based on an original image sending frequency. That is, the image sending frequency after the SF recovers image sending is higher than a refresh rate at which the DDIC currently refreshes the image. Therefore, in this case, if the upper layer recovers image sending, the sent image may correspond to an active frame of the DDIC, or may correspond to a hold frame. However, the hold frame corresponds to a moment at which the DDIC does not refresh the image. If the image sent by the SF corresponds to the hold frame, the DDIC may be caused not to immediately respond to refreshing the image, and thus a new image sent by the upper layer is not immediately displayed on the display. Therefore, to ensure that the DDIC can immediately respond to the image sent by the upper-layer SF to refresh the image, it is necessary to ensure that the image sent by the SF corresponds to the active frame of the DDIC. Therefore, in a case that it is specified that the DDIC can only switch to SEQ1 by skipping, the display driver needs to immediately control the DDIC to switch back to the first refresh rate SEQ1 when receiving the image sent by the SF.

In addition, in the display technology, the TE signal is generated by the DDIC, and the upper-layer SF generally sends the image based on the TE signal reported by the lower-layer display driver. That is, the image sending frequency of the upper-layer SF module is equivalent to a frequency of reporting the TE signal. Therefore, the frequency of reporting the TE signal by the display driver needs to be consistent with a working frame rate of the upper-layer SF module (a software frame rate synchronization requirement).

When a refresh rate of a conventional DDIC is directly controlled by the upper layer, the frequency of reporting the TE signal by the conventional DDIC generally corresponds to a refresh rate currently used, thereby ensuring consistency with an upper-layer frame rate. However, when the display driver controls the DDIC to implement an adaptive reduction in the refresh rate by using the configured refresh rate queue SEQ in the adaptive refresh rate method, once the DDIC switches from a high refresh rate to a low refresh rate, the corresponding frequency of reporting the TE signal changes with switching of the refresh rate. In a case that the upper layer just does not respond to the TE signal to send the image, but actually does not reduce the working frame rate, if the TE signal is reported based on the switched low refresh rate, the frequency of reporting the TE signal is not synchronous with the working frame rate of the upper layer, which violates the software frame rate synchronization requirement.

Therefore, in the adaptive refresh rate method, to meet a software frame rate synchronization requirement, in a process in which the DDIC implements the adaptive reduction in the refresh rate by using the first-type refresh rate queue, the display driver needs to synchronously control the DDIC to disable a TE MASK function, and report, based on the working frame rate of the upper-layer SF, the TE signal generated by the DDIC, that is, implement a skipping TE function.

TE MASK is a function that is in the DDIC and used to shield the TE signal in the middle of the refresh rate SEQi. In a case that the TE MASK function is enabled, the TE signal in the middle of each SEQi is shielded, that is, TE signals corresponding to all the hold frames in the SEQi are shielded, and the shielded TE signals cannot be reported. Whereas, in a case that the TE MASK function is disabled, the DDIC generates a TE signal based on a 120 Hz frequency, and transmits the TE signal to the display driver for reporting to the upper-layer SF.

A skipping TE function is to report one TE signal to the SF every other TE signal, which is equivalent to skipping and not reporting some TE signals that need to be reported. A TE signal that is not reported may be referred to as a skipping TE signal. For example, after the TE MASK function is disabled, the DDIC generates the TE signal based on the 120 Hz frequency. Therefore, when the working frame rate of the upper layer is 120 Hz, the display driver can directly report the TE signal generated by the DDIC to the upper-layer SF based on the 120 Hz frequency without implementing the skipping TE function, so as to ensure that the frequency of reporting the TE is synchronous with a software frame rate. Whereas, when the working frame rate of the upper layer is not 120 Hz, the skipping TE function needs to be implemented, so that the frequency of reporting the TE signal is consistent with the working frame rate of the upper-layer SF, thereby meeting the software frame rate synchronization requirement.

An implementation of the skipping TE function is determined based on whether the DDIC has a TEI function (the DDIC has a hardware function for implementing TE skipping). For a DDIC with the TEI function, such as the first DDIC, because hardware of the first DDIC has the TEI function, the skipping TE function may be directly implemented through the TEI function of the DDIC. If the skipping TE function needs to be implemented, the instruction needs to be delivered to the DDIC only to control initialization of the TEI function register.

For a DDIC without the TEI function, such as the second DDIC, because the TEI function is not configured in hardware of the DDIC, the display driver mainly implements the skipping TE function by controlling a software program. That is, for the TE signal generated by the second DDIC, the display driver reports one TE signal to the upper-layer SF every other TE signal to implement the skipping TE function. For example, in a case that the working frame rate of the upper-layer SF is 60 Hz, the rate at which the TE signal is reported also needs to be 60 Hz. After the TE MASK function is disabled, the TE signal cannot be reported to the upper-layer SF based on 120 Hz. The display driver reports one TE signal to the upper-layer SF every other TE signal on the basis of generating, by the DDIC, the TE signal based on the 120 Hz refresh rate, so that the rate at which the TE signal is reported is 60 Hz, thereby ensuring synchronization with the upper-layer working frame rate.

However, in the image display method, a refresh rate queue that is best suited to an actual application condition is configured for the DDIC. When the display frame rate of the APP or the lowest refresh rate of the display changes, the electronic device further configures a new refresh rate queue for the DDIC again based on the changed display frame rate or the lowest refresh rate.

However, at present, when different types of DDIC are configured for switching the refresh rate queue of the DDIC, there are many frame rate anomaly problems caused by improper timing of delivering the switching instruction to the DDIC.

Based on this, to solve the frame rate anomaly problem caused by configuration for switching the refresh rate queue of the DDIC by the display driver, an embodiment of this application provides a refresh rate switching method. The method is applied to an electronic device.

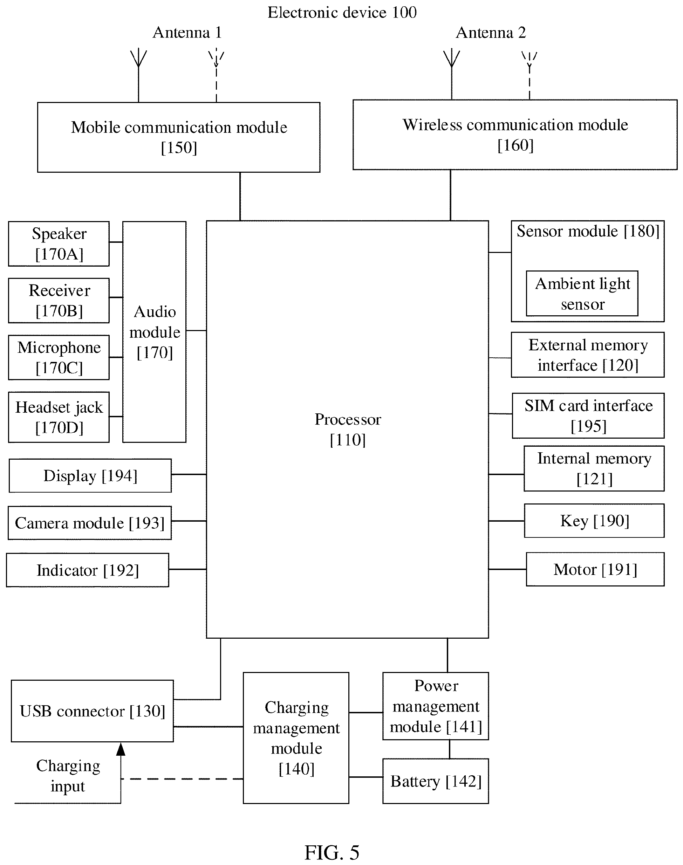

For example, FIG. 5 is a schematic structural diagram of an electronic device according to an embodiment of this application.

The electronic device 100 may include at least one of a mobile phone, a foldable electronic device (a foldable mobile phone), a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and a smart city device. A specific type of the electronic device 100 is not specifically limited in the embodiment of this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera module 193, a display 194, a subscriber identification module (subscriber identification module, SIM) card interface 195, and the like. The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

It may be understood that the structure illustrated in the embodiment of this application constitutes no specific limitation on the electronic device 100. In some other embodiments of this application, the electronic device 100 may include more or fewer components than those shown in the figure, combine some components, split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent devices, or may be integrated into one or more processors.

The processor 110 may generate an operation control signal based on instruction operation code and a timing signal, to complete control of instruction fetching and instruction execution. Specifically, in the embodiment of this application, the processor 110 may control the lower-layer DDIC to configure the refresh rate queue SEQ for the DDIC, so as to implement the refresh rate adaption method in the embodiment of this application.

A memory may be further disposed in the processor 110 to store instructions and data. In some embodiments, the memory in the processor 110 may be a cache. The memory may store instructions or data used or frequently used by the processor 110. If the processor 110 needs to use the instructions or the data, the instructions or the data may be directly invoked from the memory. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. The processor 110 may be connected to modules such as the touch sensor, the audio module, the wireless communication module, the display, and the camera through at least one type of the interfaces.

It may be understood that, an interface connection relationship between the modules shown in the embodiment of this application is merely an example for description, and constitutes no limitation on the structure of the electronic device 100. In some other embodiments of this application, the electronic device 100 may alternatively use an interface connection manner different from that in the embodiment, or a combination of a plurality of interface connection manners.

The external memory interface 120 may be configured to connect to an external memory card, for example, a Micro SD card, to expand a storage capability of the electronic device 100. The external memory card communicates with the processor 110 through the external memory interface 120, to implement a data storage function. For example, files such as music and videos are stored in the external memory card. Alternatively, files such as music and videos are transmitted from the electronic device to the external memory card.

The internal memory 121 may be configured to store a computer-executable program code, and the executable program code includes instructions. The internal memory 121 may include a program storage area and a data storage area. The program storage area may store an operating system, an application required by at least one function (for example, a sound playing function or an image playing function), and the like. The data storage area may store data (for example, audio data and a phone book) and the like created during use of the electronic device 100. In addition, the internal memory 121 may include a high-speed random access memory, and may further include a nonvolatile memory, for example, at least one magnetic disk storage device, a flash memory device, or a universal flash storage (universal flash storage, UFS). The processor 110 runs the instructions stored in the internal memory 121, and/or instructions stored in a memory disposed in the processor, to execute various function methods or data processing of the electronic device 100.

The charging management module 140 is configured to receive a charging input from the charger for charging the battery 142. When charging the battery 142, the charging management module 140 may further supply power to the electronic device through the power management module 141.

The power management module 141 is configured to be connected to the battery 142, the charging management module 140, and the processor 110. The power management module 141 receives an input from the battery 142 and/or an input from the charging management module 140, and supplies power to the processor 110, the internal storage 121, the display 194, the camera module 193, the wireless communication module 160, and the like. The power management module 141 may be further configured to monitor parameters such as a battery capacity, a quantity of battery cycles, and a battery health status (leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. The mobile communication module 150 may provide a solution applied to the electronic device 100 for wireless communication including 2G/3G/4G/5G and the like.

The wireless communication module 160 may provide a solution for wireless communication that is applied to the electronic device 100 and that includes a wireless local area network (wireless local area networks, WLAN) (for example, a wireless fidelity (wireless fidelity, Wi-Fi) network), Bluetooth (bluetooth, BT), a Bluetooth low energy (bluetooth low energy, BLE), an ultra wide band (ultra wide band, UWB), a global navigation satellite system (global navigation satellite system, GNSS), frequency modulation (frequency modulation, FM), a near field communication (near field communication, NFC) technology, an infrared (infrared, IR) technology, and the like.

In some embodiments, in the electronic device 100, the antenna 1 is coupled to the mobile communication module 150, and the antenna 2 is coupled to the wireless communication module 160, so that the electronic device 100 may communicate with a network and another electronic device by using a wireless communication technology.

The electronic device 100 may implement a display function by using the GPU, the display 194, the application processor, and the like. The GPU is a microprocessor for image processing, and is connected to the display 194 and the application processor. The GPU is configured to perform mathematical and geometric computing for graphics rendering. The processor 110 may include one or more GPUs that execute program instructions to generate or change display information.

The display 194 is configured to display an image, a video, and the like. The display 194 includes a display panel. In the embodiment of this application, the display panel may be an organic light-emitting diode (organic light-emitting diode, OLED), an active-matrix organic light-emitting diode (active-matrix organic light-emitting diode, AMOLED), a flex light-emitting diode (flex light-emitting diode, FLED), Miniled, MicroLed, Micro-oLed, a quantum dot light-emitting diode (quantum dot light-emitting diode, QLED), or the like.

In some embodiments, the electronic device 100 may include one or more displays 194. For actual requirements, different displays may be controlled by different DDICs. For example, the electronic device 100 includes a first DDIC with the TEI function and a second DDIC without the TEI function. The first DDIC may control the first display, and the second DDIC may control the second display.

The electronic device 100 may implement a photographing function through the camera module 193, the ISP, the video encoder and decoder, the GPU, the display 194, the application processor AP, the neural-network processing unit NPU, and the like.

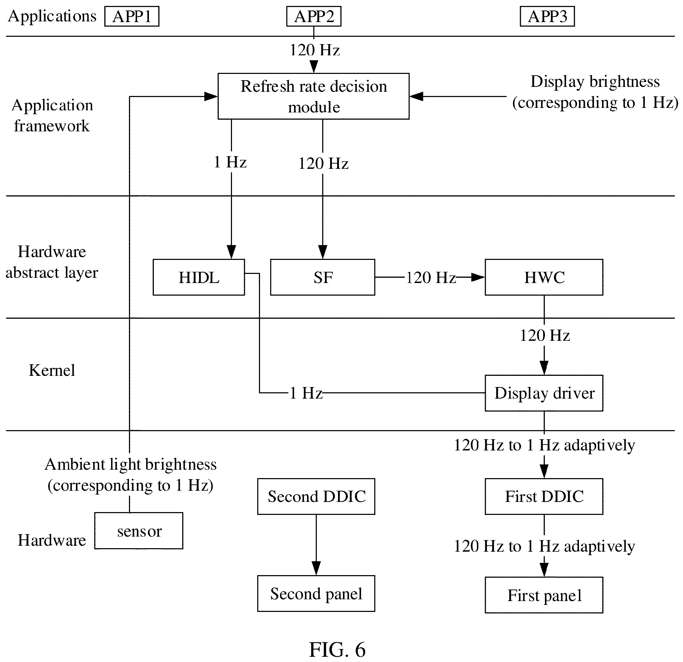

FIG. 6 is a block diagram of a software structure of the electronic device 100 according to an embodiment of this application. FIG. 6 also shows a schematic diagram of system-layer interaction of an existing image display method by using a first DDIC as an example.

In a layered architecture, software is divided into several layers, and each layer has a clear role and task. The layers communicate with each other through software interfaces. In some embodiments, an Android system is divided into four layers, namely, applications (applications), an application framework (application framework), a hardware abstract layer (hardware abstract layer, HAL), and a kernel (kernel) from top to bottom.

The applications may include a series of application packages. The application packages may include APPs such as a desktop, a game, a camera, a gallery, a calendar, a call, a map, a navigation, WLAN, Bluetooth, music, a video, and an SMS message.

The application framework provides an application programming interface (application programming interface, API) and a programming framework for applications at the applications. The application framework includes some predefined functions. As shown in FIG. 6, the application framework in the embodiment of this application includes a refresh rate decision module.

The hardware abstract layer runs in user space (user space), encapsulates a driver at the kernel, and provides an invoking interface to the upper layer. As shown in FIG. 6, the hardware abstract layer in the embodiment of this application includes a HAL interface definition language (HAL interface definition language, HIDL) interface, an SF module, and a hardware composer (hardware composer, HWC). The HWC has a function and a capability of combining and displaying an image data group by using hardware.

The kernel is a layer between hardware and software, as shown in FIG. 6. Specifically, in the embodiment of this application, the kernel at least includes a display driver. Hardware involved may include a DDIC and a panel (panel). The display driver is configured to drive the DDIC to complete processing and implementation of display. For a foldable electronic device (for example, a foldable screen mobile phone that includes two screens such as an inner screen and an outer screen), FIG. 6 shows a first DDIC and a second DDIC, and a first panel and a second panel that are respectively corresponding to the two DDICs. The first DDIC may correspond to the first display of the foldable screen mobile phone, and the second DDIC may correspond to the second display of the foldable screen mobile phone. Certainly, the method provided in the embodiment of this application may also be applicable to an electronic device that includes only one display. Regardless of whether the electronic device includes several displays, a refresh rate switching method provided in the embodiment of this application may be applied to each display of the electronic device and a corresponding DDIC of the electronic device.

In the following embodiment, the following solution is described by using an example in which the refresh rate switching method provided in the embodiments of this application is applicable to the first DDIC. The first DDIC refers to a DDIC with the TEI function, for example, a DDIC of Model 37900. The refresh rate switching method provided for the first DDIC is applied to the electronic device including the first DDIC, and the first DDIC correspondingly has a display (hereinafter referred to as a first display). For a structure of the electronic device, refer to FIG. 5. For a software structure, refer to FIG. 6.

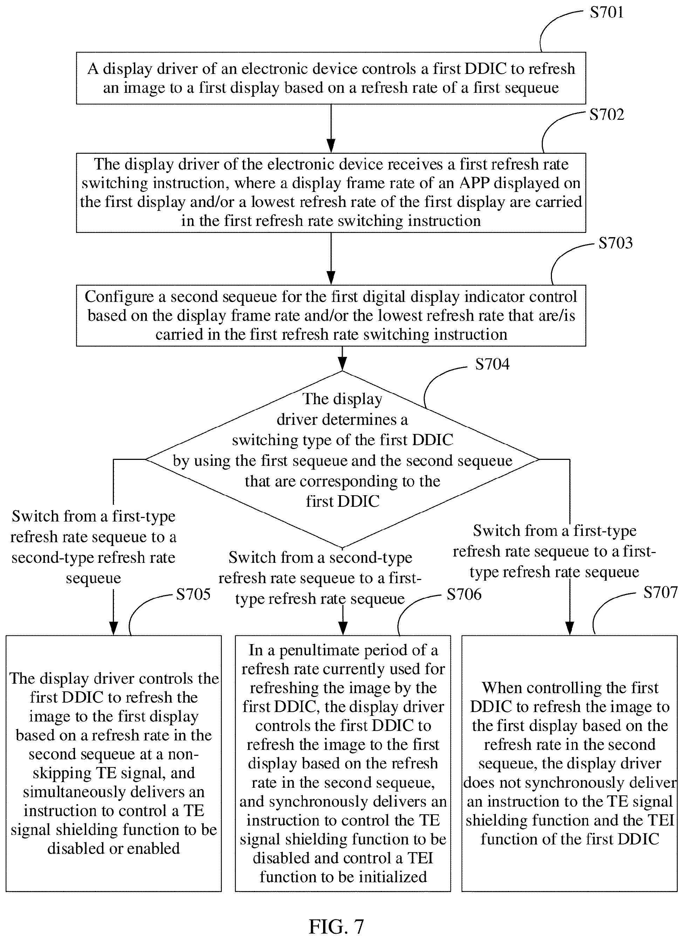

FIG. 7 is a schematic flowchart of a refresh rate switching method for a first DDIC according to an embodiment of this application.

The following describes the refresh rate switching method in the embodiment of this application with reference to FIG. 7. The refresh rate switching method in the embodiment of this application includes steps S701-S707.

S701: A display driver of an electronic device controls a first DDIC to refresh an image to a first display based on a refresh rate of a first queue.

The first queue is a refresh rate queue currently used by the first DDIC, and a type of the first queue may be a first-type refresh rate queue, or may be a second-type refresh rate queue.

The first-type refresh rate queue is a refresh rate queue that includes at least two refresh rates distributed from high to low. In the embodiment of this application, the first-type refresh rate queue may alternatively be referred to as an adaptive SEQ. The second-type refresh rate queue is a refresh rate queue in which a last refresh rate has a refresh rate value and a refresh rate before the last refresh rate is null. That is, the last queue value in the second-type refresh rate queue has a corresponding refresh rate, and a refresh rate of another queue value is null. The second-type refresh rate queue may alternatively be referred to as a constant SEQ.

The type of the first queue may be determined by the display driver based on the display frame rate of the APP displayed on the first display and the lowest refresh rate of the first display. When the display frame rate is greater than the lowest refresh rate, and in a case that the display frame rate is not equal to 120 Hz and the lowest refresh rate is not equal to 60 Hz, the display driver may configure the first-type refresh rate queue for the first DDIC, so the type of the first queue is the first-type refresh rate queue. However, when the display frame rate is greater than the lowest refresh rate, but in a case that the display frame rate is equal to 120 Hz and the lowest refresh rate is equal to 60 Hz, or the display frame rate is equal to the lowest refresh rate, the display driver may configure the second-type refresh rate queue for the first DDIC, so the type of the first queue is the second-type refresh rate queue.

In a case that the first queue is the first-type refresh rate queue, the display driver controls the first DDIC to refresh the image based on the first-type refresh rate queue. Specifically, the display driver first controls the first DDIC to refresh the image to the corresponding display based on the first refresh rate in the first-type refresh rate queue. Then, in a case that the display driver determines that the SF module does not send the image based on the reported TE signal, the display driver controls, based on the rank order of refresh rates in the first-type refresh rate queue, the first DDIC to refresh the image to the display based on a next refresh rate in the first-type refresh rate queue. That is, the first DDIC is controlled to switch from the first refresh rate to the second refresh rate, and the image is refreshed to the display based on the second refresh rate. Similarly, the display driver may control the first DDIC again to switch to a third refresh rate based on an image sending condition of the SF, and refresh the image to the display based on the third refresh rate. By analogy, if the first DDIC has been controlled to refresh the image to the display based on the last refresh rate, it indicates that the current refresh rate has been decreased to the lowest refresh rate that can be supported by the display. If there is no situation of switching refresh rates, the first DDIC keeps working based on the lowest refresh rate.

In a case that the first queue is the second-type refresh rate queue, because a queue value that is null in the refresh rate queue SEQ is directly skipped, when the display driver controls the first DDIC to refresh the image to the display by using the second-type refresh rate queue, that is, the first DDIC is directly controlled to refresh the image to the display by using the last refresh rate in the second-type refresh rate queue, it indicates that the DDIC works based on the constant refresh rate.

S702: The display driver of the electronic device receives a first refresh rate switching instruction, where a display frame rate of an APP displayed on the first display and/or a lowest refresh rate of the first display are/is carried in the first refresh rate switching instruction.

The first refresh rate switching instruction is a refresh rate switching instruction delivered by the first DDIC. The first refresh rate switching instruction is delivered when the display frame rate of the APP displayed on the display (such as referred to as the first display) corresponding to the first DDIC or the lowest refresh rate of the first display changes. Therefore, the display frame rate of the APP displayed on the first display and/or the lowest refresh rate of the first display are carried in the first refresh rate switching instruction. The first refresh rate instruction is used to indicate, to the display driver, a frame rate that needs to be changed by the first DDIC.

For example, when the display frame rate of the APP displayed on the first display corresponding to the first DDIC changes in the electronic device, after obtaining the changed display frame rate, the refresh rate decision module delivers the first refresh rate switching instruction in which the updated display frame rate is carried to the display driver by using the SF module and the HWC.

Alternatively, when display brightness of the first display and/or detected ambient light brightness change the lowest refresh rate of the first display, after obtaining the changed lowest refresh rate, the refresh rate decision module invokes an HIDL interface to deliver the first refresh rate switching instruction in which the updated lowest refresh rate is carried to the display driver.

Alternatively, if both the display frame rate of the APP displayed on the first display and the lowest refresh rate of the first display change, the updated display frame rate and lowest refresh rate may be synchronously delivered to the display driver by using two channels. That is, while delivering the first refresh rate switching instruction in which the display frame rate is carried to the display driver by using the SF module and the HWC, the refresh rate decision module synchronously invokes the HIDL interface to deliver the first refresh rate switching instruction in which the lowest refresh rate is carried to the display driver.

S703: Configure a second queue for the first display driver integrated circuit based on the display frame rate and/or the lowest refresh rate that are/is carried in the first refresh rate switching instruction.

Specifically, after receiving the first refresh rate switching instruction, the display driver may configure a new refresh rate queue (that is, the second queue) for the first DDIC based on the display frame rate and/or the lowest refresh rate that are/is carried in the first refresh rate switching instruction. That is, the second queue may be understood as a refresh rate queue configured for the first DDIC based on the currently changed display frame rate and/or the lowest refresh rate, namely, a refresh rate queue that currently needs to be switched for the first DDIC. A type thereof may alternatively be the first-type refresh rate queue or the second-type refresh rate queue. For description of the first-type refresh rate queue or the second-type refresh rate queue, refer to descriptions in S701. Details are not described herein again.

Therefore, when only the display frame rate is carried in the first refresh rate switching instruction, the display driver configures, based on the display frame rate that are carried in the first refresh rate switching instruction and the lowest refresh rate that is not changed by the first display (that is, corresponding to the lowest refresh rate used when the refresh rate queue is configured for the first DDIC last time), the second queue that currently needs to be switched. Therefore, when only the lowest refresh rate of the first display is carried in the first refresh rate switching instruction, the display driver configures, based on the lowest refresh rate and the unchanged display frame rate (that is, corresponding to the lowest refresh rate used when the refresh rate queue is configured for the first DDIC last time) that are carried in the first refresh rate switching instruction, the second queue that currently needs to be switched. However, when both the display frame rate of the APP displayed on the first display and the lowest refresh rate of the first display are carried in the first refresh rate switching instruction, the display driver directly configures, based on the display frame rate and the lowest refresh rate that are carried in the first refresh rate switching instruction, the second queue that currently needs to be switched.

S704: The display driver determines a switching type of the first DDIC by using the first queue and the second queue that are corresponding to the first DDIC.

Specifically, after the display driver configures the corresponding second queue for the first DDIC in response to the first refresh rate switching instruction, the switching type of the switching refresh rate queue of the first DDIC this time may be determined by comparing the newly configured second queue with the first queue applied to the current first DDIC.

Types of the refresh rate queues included in the first queue and the second queue corresponding to the first DDIC may both be the first-type refresh rate queue or the second-type refresh rate queue. Therefore, the switching types may include: switching from the first-type refresh rate queue to the second-type refresh rate queue (equivalent to switching from the adaptive SEQ to the constant SEQ), and switching from the second-type refresh rate queue to the first-type refresh rate queue (equivalent to switching from the constant SQE to the adaptive SEQ). The switching from the first-type refresh rate queue to the second-type refresh rate queue means that the first DDIC switches from refreshing the image to the first display based on the refresh rate in the first-type refresh rate queue to refreshing the image to the first display based on the refresh rate in the second-type refresh rate queue. The switching from the second-type refresh rate queue to the first-type refresh rate queue means that the first DDIC switches from refreshing the image to the first display based on the refresh rate in the second-type refresh rate queue to refreshing the image to the first display based on the refresh rate in the first-type refresh rate queue.

Further, different display frame rates or the lowest refresh rate may correspond to different first-type refresh rate queues, or may correspond to different second-type refresh rate queues. Therefore, the switching types may further include switching between different first-type refresh rate queues (equivalent to switching from an adaptive SEQ to an adaptive SEQ) and switching between different second-type refresh rate queues (equivalent to switching from a constant SEQ to a constant SEQ). Switching between different first-type refresh rate queues means that the first DDIC switches from refreshing the image to the first display based on a refresh rate in a first-type refresh rate queue to refreshing the image to the first display based on a refresh rate in another first-type refresh rate queue. Switching between different second-type refresh rate queues means that the first DDIC switches from refreshing the image to the first display based on a refresh rate in a second-type refresh rate queue to refreshing the image to the first display based on a refresh rate in another second-type refresh rate queue.

In a case that the switching type is switching from the first-type refresh rate queue to the second-type refresh rate queue, S705 is performed. In a case that the switching type is switching from the second-type refresh rate queue to the first-type refresh rate queue, S706 is performed. In a case that the display driver determines that the switching type is switching from the first-type refresh rate queue to the first-type refresh rate queue, S707 is performed. It should be understood that an unmentioned switching type represents that there is no frame rate anomaly problem occurring during the switching.

In the embodiment of this application, by identifying the switching type, it can be ensured that an adaptive switching manner is subsequently selected based on the switching type to switch the refresh rate queue for the first DDIC, so that a specific manner can be used to avoid the frame rate anomaly problem in a specific case.

S705: The display driver controls the first DDIC to refresh the image to the first display based on the refresh rate in the second queue at the non-skipping TE signal, and simultaneously delivers an instruction to control a TE signal shielding function to be enabled.

The non-skipping TE signal is a TE signal reported to an SF. Correspondingly, a skipping TE signal skips the TE signal that is not reported to the SF. The DDIC disables the TE signal shielding (TE MASK) function when refreshing the image to the display based on the refresh rate in the first-type refresh rate queue. After the TE MASK function is disabled, the DDIC generates the TE signal based on the 120 Hz frequency. To make the frequency reported by the TE signal consistent with the upper-layer SF working frame rate to meet the software frame rate synchronization requirement, the skipping TE function is implemented synchronously, and then the non-skipping TE-hop signal and the skipping TE signal are generated. When the upper-layer working frame rate is 120 Hz, the display driver may directly report the TE signal generated by the DDIC to the upper-layer SF based on the 120 Hz frequency without implementing the skipping TE function. When the upper-layer working frame rate is not 120 Hz, the skipping TE function needs to be implemented, so that the frequency reported by the TE signal is consistent with the working frame rate of the upper-layer SF, and therefore, the non-skipping TE signal and the skipping TE signal are generated.

For the first DDIC with the TEI function, because the hardware of the first DDIC has the TEI function, the skipping TE function may be directly implemented by using the TEI function of the DDIC. If the skipping TE function needs to be implemented, the instruction needs to be delivered to the DDIC only to control initialization of the TEI function register. For the second DDIC without the TEI function, because hardware of the second DDIC is not configured with the TEI function, the display driver mainly implements the skipping TE function by control of a software program. That is, for the TE signal generated by the second DDIC, the display driver reports one TE signal to the upper-layer SF every other TE signal to implement the skipping TE function. For example, in a case that the working frame rate of the upper-layer SF is 60 Hz, the rate at which the TE signal is reported also needs to be 60 Hz. After the TE MASK function is disabled, the TE signal cannot be reported to the upper-layer SF based on 120 Hz. The display driver reports one TE signal to the upper-layer SF every other TE signal on the basis of generating, by the DDIC, the TE signal based on the 120 Hz refresh rate, so that the rate at which the TE signal is reported is 60 Hz, thereby ensuring synchronization with the upper-layer working frame rate.

Specifically, if the first queue is a first-type refresh rate queue and the second queue is a second-type refresh rate queue, switching from the first-type refresh rate queue to the second-type refresh rate queue is performed. Therefore, the display driver needs to control the TE MASK function of the first DDIC to switch from disabled to enabled. However, because the first DDIC is the DDIC with the TEI function, disabling or enabling of the TE MASK function of the first DDIC does not take effect immediately, but takes effect only after a vertical synchronization (vertical synchronization, Vsync) signal. Because the DDIC outputs the TE signal based on a Vsync period, the Vsync signal and the TE signal are synchronous equivalently. Therefore, it may be understood that the TE MASK function of the first DDIC takes effect after one TE signal. In addition, the TEI function of the first DDIC is the same as the TE MASK, and takes effect after one TE signal.

In addition, when the first DDIC refreshes the image to the first display based on the first-type refresh rate queue (adaptive SEQ), the rate at which the TE signal is reported by the display driver based on the actual working frame rate of the upper-layer SF is 120 Hz or 60 Hz. At 60 Hz, every other TE signal is reported. In this case, the display driver directly delivers the switching instruction to the first DDIC regardless of timing, and controls the first DDIC to switch from the first refresh rate being used currently to the newly configured second-type refresh rate queue. If the timing of the switching instruction is before the skipping TE signal, the TE MASK takes effect after the skipping TE signal, so that the next non-skipping TE signal that corresponds to the skipping TE signal and does not need to be skipped but should be reported may be shielded, thereby causing the frame rate anomaly problem.

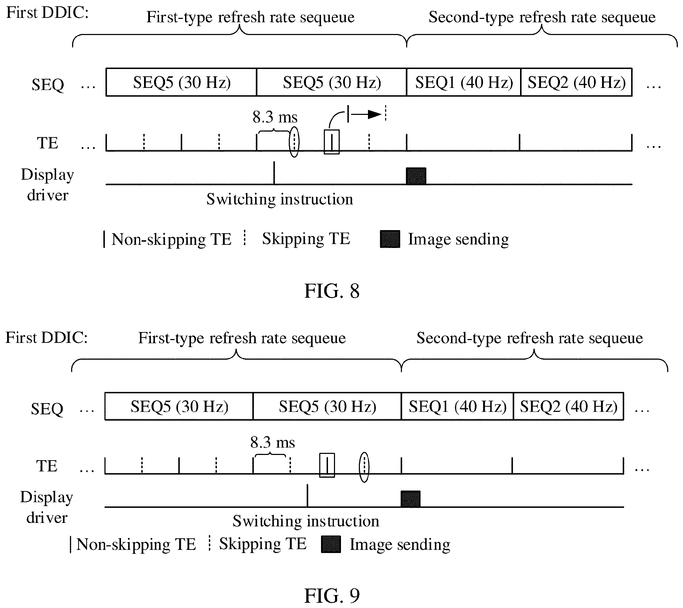

For example, referring to FIG. 8, it is assumed that the first DDIC currently works based on a fifth refresh rate of 30 Hz (SEQ5) in the first-type refresh rate queue. In this case, when the display driver delivers the switching instruction to the first DDIC, the time is within a first period of 8.3 ms of the fifth refresh rate (SEQ5). That is, the TE signal corresponding to the switching instruction is a skipping TE signal (the TE signal surrounded by an ellipse in FIG. 8). In this case, since the TE MASK takes effect after one TE signal, after the TE MASK is enabled, the TE MASK takes effect after this skipping TE signal (the TE signal surrounded by the ellipse in FIG. 8). Therefore, the non-skipping TE signal that originally should be reported (the TE signal surrounded by a rectangle in FIG. 8) is shielded by the TE MASK and cannot be reported, which is equivalent to that the non-skipping TE signal is converted into the skipping TE signal, thereby causing a 33 ms abnormal frame occurring in the frame rate anomaly.

Based on this, to avoid the frame rate anomaly, referring to FIG. 9, when switching from the first-type refresh rate queue of the first DDIC to the second-type refresh rate queue, the display driver of the electronic device may deliver the switching instruction before the non-skipping TE signal (a TE signal surrounded by a rectangle in FIG. 9) by cooperating with time that the TE MASK takes effect. Then, after this non-skipping signal (the TE signal surrounded by a rectangle in FIG. 9), the corresponding first TE signal (a TE signal surrounded by an ellipse in FIG. 9) is shielded even after the TE MASK takes effect. However, the TE signal (the TE signal surrounded by the ellipse in FIG. 9) is originally a TE signal, namely just a TE signal that needs to be shielded. Therefore, an abnormal frame does not occur. After the TE MASK takes effect, the TE signal is normally reported based on the second-type refresh rate queue after switching.

That is, for the first DDIC with the TEI function, when configuration of the refresh rate queue SEQ of the first DDIC needs to be switched from the adaptive SEQ to the constant SEQ, the switching instruction needs to be delivered before the non-skipping TE signal to avoid the problem of the abnormal frame.

S706: In a penultimate period of a refresh rate currently used for refreshing the image by the first DDIC, the display driver controls the first DDIC to refresh the image to the first display based on the refresh rate in the second queue, and synchronously delivers an instruction to control the TE signal shielding function to be disabled and control a TEI function to be initialized.

Specifically, the TEI function of the first DDIC is a hardware skipping TE, and the TEI is a function in which no explicit control switch can be used to implement enabling or disabling control. Mainly, after the TEI function register of the DDIC is initialized, one TE signal is given as a starting TE, and then TE skipping is implemented by counting.

It may be understood that, after the TEI function of the first DDIC is initialized, a TE is first given to the TEI function as the first non-skipping TE, and then the function may start to count to determine that the second TE is a TE that needs to skip. According to this manner, the third non-skipping TE and the fourth skipping TE are determined by counting in a descending order, so as to implement TE skipping.

Based on this, when the first DDIC needs to switch from the second-type refresh rate queue (constant SEQ) to the first-type refresh rate queue (adaptive SEQ), because use of the first-type refresh rate queue needs to disable the TE MASK function and cooperate to implement the skipping TE function, the TEI function needs to be enabled to start counting to implement TE skipping. Therefore, after one TE signal of the TEI function takes effect, the one TE signal of the TEI function needs to be used as a starting TE signal of the skipping TE.

In this case, if the timing of delivering the switching instruction of the display driver is within the last period of the refresh rate currently used for refreshing the image by the first DDIC, the TE MSAK is disabled and takes effect after one TE signal, so that the latest TE signal is used as the starting TE signal of the TEI. However, after the TE MASK is disabled and takes effect, the TE signal is directly generated based on the 120 Hz frequency. Therefore, the latest TE signal is located at 8.3 ms, so that after switching to the first-type refresh rate queue (adaptive SEQ), the first-type refresh rate queue has an additional abnormal frame of 8.3 ms, thereby causing a frame loss and displaying a catching phenomenon. When the DDIC refreshes the image to the display based on the refresh rate queue, only a certain refresh rate in the refresh rate queue may be used as the criterion. Therefore, the refresh rate currently used for refreshing the image by the DDIC means a refresh rate currently used by the DDIC.

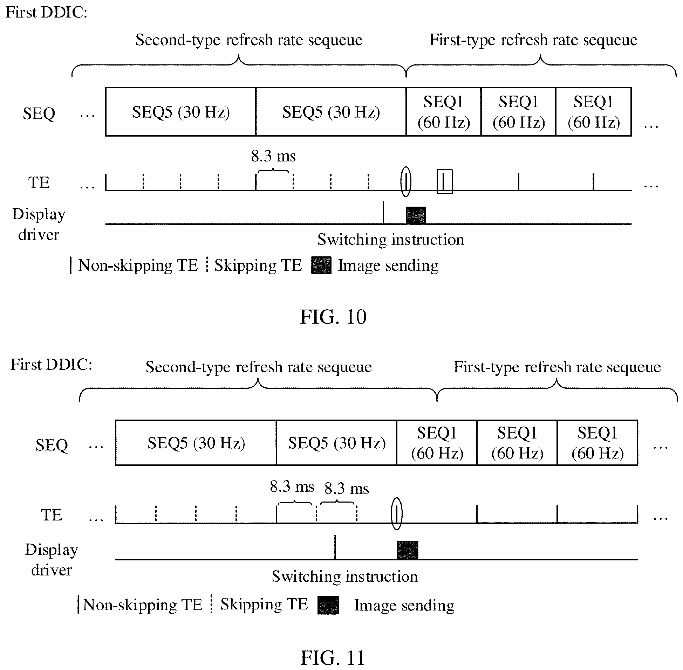

For example, referring to FIG. 10, when the first DDIC works based on the 30 Hz refresh rate in the second-type refresh rate queue, if the timing of delivering the switching instruction to the first DDIC by the display driver, the time is within the last period (the last 8.3 ms) of the 30 Hz refresh rate, TE skipping is implemented since one starting TE signal needs to be given to the TEI, so that the TE MASK function generates a TE signal after the TE signal (a TE signal surrounded by an ellipse in FIG. 10) takes effect. As a result, a first-type refresh rate queue after switching has an additional TE signal (a TE signal surrounded by a rectangle in FIG. 10) generated after 8.3 ms. According to a skipping TE rule of the first-type refresh rate queue, the TE signal originally and normally should be a skipping TE signal that should be skipping but is not reported. However, the TE signal is now generated by the TE MASK as the starting TE signal of the TEI, and consequently, the first-type refresh rate queue after switching has an additional abnormal frame of 8.3 ms.

In addition, referring to FIG. 11, if the timing of delivering the switching instruction by the display driver is within the second period (second 8.3 ms) of the refresh rate currently used for refreshing the image by the first DDIC, the TE signal (a TE signal surrounded by an ellipse in FIG. 11) is generated immediately after the TE MASK function of one TE signal is disabled and takes effect. In this case, if the image is sent correspondingly, the TE signal is immediately switched to the first refresh rate of the first-type refresh rate queue (adaptive SEQ). Therefore, a period of the refresh rate currently used for refreshing the image is prematurely ended, thereby causing the abnormal frame.

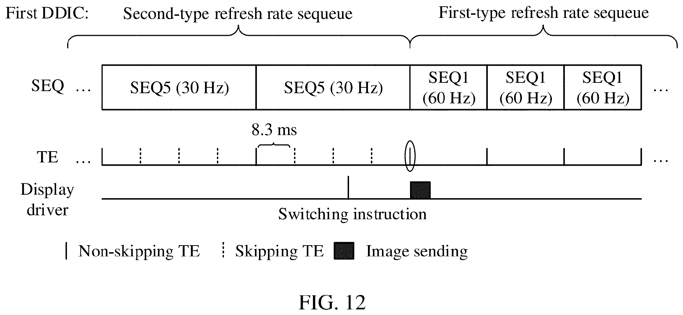

Based on this, referring to FIG. 12, if the display driver needs to switch from the second-type refresh rate queue of the first DDIC to the first-type refresh rate queue, to cooperate with the TEI function, one TE signal needs to be effective and one TE signal needs to be played out as the starting signal of the skipping TE, the display driver may control the switching instruction to be delivered to the penultimate period of the refresh rate currently used for refreshing the image by the first DDIC. In this way, after the TE signal and the TE MASK after one TE signal take effect, a non-skipping TE signal (a TE signal surrounded by an ellipse in FIG. 12) that needs to be reported can be reported. In this case, occurrence of the abnormal frame can be avoided.

That is, for the first DDIC with the TEI function, when the configuration of the refresh rate queue SEQ of the first DDIC is switched from the constant SEQ to the adaptive SEQ, the switching instruction needs to be delivered in the penultimate period of the refresh rate currently used for refreshing the image by the first DDIC to avoid occurrence of the abnormal frame.

S707: When controlling the first DDIC to refresh the image to the first display based on the refresh rate in the second queue, the display driver does not synchronously deliver an instruction to the TE signal shielding function and the TEI function of the first DDIC.

Specifically, in a case that the display driver controls the first DDIC to switch from a first-type refresh rate queue to a first-type refresh rate queue (switch from an adaptive SEQ to an adaptive SEQ), because the type of the switched refresh rate queue does not change and the first refresh rate is 60 Hz, the TE MASK function and the TEI function of the first DDIC may be changed without control, so that the first DDIC continues to remain in an original state. However, the TEI function implements TE skipping by counting with the register. Therefore, when switching of the refresh rate queue exists, it is necessary to initialize the TEI function register and start to recount for TE skipping. Therefore, the first DDIC switches from the first-type refresh rate queue to the first refresh rate queue, resulting in a situation that is the same as switching from the second-type refresh rate queue to the first-type refresh rate queue because of initialization of the TEI function, that is, an additional abnormal frame rate of 8.3 ms is generated.

To avoid the abnormal frame rate caused by this problem, the display driver may discard to deliver a control instruction to the TEI function when switching from the first-type refresh rate queue to the first-type refresh rate queue, and directly does not control initialization of the TEI function register. Therefore, the TEI function does not need one starting TE signal to be recounted, and then does not generate an additional abnormal frame of 8.3 ms.

In the following embodiment, the following solution is described by using an example in which the refresh rate switching method provided in the embodiments of this application is applicable to the second DDIC. The second DDIC refers to a DDIC without the TEI function, for example, a DDIC of Model 37701A. The refresh rate switching method provided for the second DDIC is applied to the electronic device including second first DDIC, and the second DDIC correspondingly has a display (hereinafter referred to as a second display). For a structure of the electronic device, refer to FIG. 5. For a software structure, refer to FIG. 6.

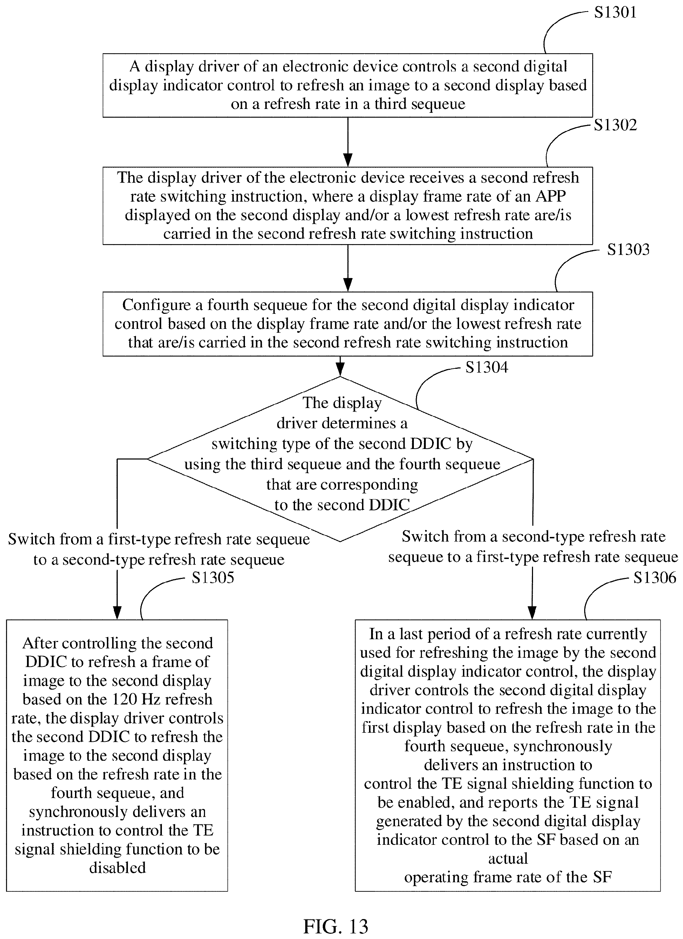

FIG. 13 is a schematic flowchart of a refresh rate switching method for a second DDIC according to an embodiment of this application.

The following describes the refresh rate switching method in the embodiment of this application with reference to FIG. 13. The refresh rate switching method in the embodiment of this application includes steps S1301-S1306.

S1301: The display driver of the electronic device controls the second display driver integrated circuit to refresh the image to the second display based on a refresh rate in a third queue.

The third queue is a refresh rate queue currently used by the second DDIC, and a type of the third queue may be the same as or different from a type of the first queue. That is, the third queue may be a first-type refresh rate queue, or may be a second-type refresh rate queue.

Similarly, the first-type refresh rate queue refers to a refresh rate queue SEQ that includes at least two refresh rates and has refresh rates distributed from high to low. In the embodiment of this application, the first-type refresh rate queue may alternatively be referred to as an adaptive SEQ. The second-type refresh rate queue is a refresh rate queue in which a last refresh rate has a refresh rate value and a refresh rate before the last refresh rate is null. That is, the last queue value in the second-type refresh rate queue has a corresponding refresh rate, and a refresh rate of another queue value is null. The second-type refresh rate queue may alternatively be referred to as a constant SEQ.

The type of the third queue may be determined by the display driver based on the display frame rate of the APP displayed on the second display and the lowest refresh rate of the second display. When the display frame rate is greater than the lowest refresh rate, and in a case that the display frame rate is not equal to 120 Hz and the lowest refresh rate is not equal to 60 Hz, the display driver may configure the second-type refresh rate queue for the second DDIC, so the type of the third queue is the first-type refresh rate queue. However, when the display frame rate is greater than the lowest refresh rate, but in a case that the display frame rate is equal to 120 Hz and the lowest refresh rate is equal to 60 Hz, or the display frame rate is equal to the lowest refresh rate, the display driver may configure the second-type refresh rate queue for the second DDIC, so the type of the third queue is the second-type refresh rate queue.

In a case that the third queue is the first-type refresh rate queue, the display driver controls the second DDIC to refresh the image based on the first-type refresh rate queue. Specifically, the display driver first controls the second DDIC to refresh the image to the corresponding display based on the first refresh rate in the first-type refresh rate queue. Then, in a case that the display driver determines that the SF module does not send the image based on the reported TE signal, the display driver controls, based on the rank order of refresh rates in the first-type refresh rate queue, the second DDIC to refresh the image to the display based on a next refresh rate in the first-type refresh rate queue. That is, the second DDIC is controlled to switch from the first refresh rate to the second refresh rate, and the image is refreshed to the display based on the second refresh rate. Similarly, the display driver may control the second DDIC again to switch to a third refresh rate based on an image sending condition of the SF, and refresh the image to the display based on the third refresh rate. By analogy, if the second DDIC has been controlled to refresh the image to the display based on the last refresh rate, it indicates that the current refresh rate has been decreased to the lowest refresh rate that can be supported by the display. If there is no situation of switching refresh rates, the second DDIC keeps working based on the lowest refresh rate.

In a case that the third queue is the second-type refresh rate queue, because a queue value that is null in the refresh rate queue SEQ is directly skipped, when the display driver controls the second DDIC to refresh the image to the display by using the second-type refresh rate queue, that is, the second DDIC is directly controlled to refresh the image to the display by using the last refresh rate in the second-type refresh rate queue, it indicates that the DDIC works based on the constant refresh rate.

S1302: The display driver of the electronic device receives a second refresh rate switching instruction, where a display frame rate of an APP displayed on the second display and/or a lowest refresh rate are/is carried in the second refresh rate switching instruction.

The second refresh rate switching instruction is a refresh rate switching instruction delivered by the second DDIC. The second refresh rate switching instruction is delivered when the display frame rate of the APP displayed on the display (such as referred to as the second display) corresponding to the second DDIC or the lowest refresh rate of the second display changes. Therefore, the display frame rate of the APP on the second display and/or the lowest refresh rate of the second display are carried in the second refresh rate switching instruction. The second refresh rate instruction is used to indicate, to the display driver, a frame rate that needs to be changed by the second DDIC.

For example, when the display frame rate of the APP displayed on the second DDIC corresponding to the second display changes in the electronic device, after obtaining the changed display frame rate, the refresh rate decision module delivers the second refresh rate switching instruction in which the updated display frame rate is carried to the display driver by using the SF module and the HWC.

Alternatively, when display brightness of the second display and/or detected ambient light brightness change the lowest refresh rate of the second display, after obtaining the changed lowest refresh rate, the refresh rate decision module invokes an HIDL interface to deliver the second refresh rate switching instruction in which the updated lowest refresh rate is carried to the display driver.

Alternatively, if both the display frame rate of the APP displayed on the second display and the lowest refresh rate of the second display change, the updated display frame rate and lowest refresh rate may be synchronously delivered to the display driver by using two channels. That is, while delivering the second refresh rate switching instruction in which the display frame rate is carried to the display driver by using the SF module and the HWC, the refresh rate decision module synchronously invokes the HIDL interface to deliver the second refresh rate switching instruction in which the lowest refresh rate is carried to the display driver.

S1303: Configure a fourth queue for the second display driver integrated circuit based on the display frame rate and/or the lowest refresh rate that are/is carried in the second refresh rate switching instruction.

Specifically, after receiving the second refresh rate switching instruction, the display driver may configure a new refresh rate queue (that is, the fourth queue) for the second DDIC based on the display frame rate and/or the lowest refresh rate that are/is carried in the second refresh rate switching instruction. That is, the fourth queue may be understood as a refresh rate queue configured for the second DDIC based on the currently changed display frame rate and/or the lowest refresh rate, that is, a refresh rate queue that currently needs to be switched for the second DDIC. A type thereof may alternatively be a first-type refresh rate queue or a second-type refresh rate queue. For description of the first-type refresh rate queue or the second-type refresh rate queue, refer to descriptions in S701 or S1301. Details are not described herein again.

Therefore, when only the display frame rate is carried in the second refresh rate switching instruction, the display driver configures, based on the display frame rate and the unchanged lowest refresh rate of the second display (that is, corresponding to the lowest refresh rate used when the refresh rate queue is configured for the second DDIC last time) that are carried in the second refresh rate switching instruction, the fourth queue that currently needs to be switched. When only the lowest refresh rate of the second display is carried in the second refresh rate switching instruction, the display driver configures, based on the display frame rate and the unchanged lowest refresh rate (that is, corresponding to the lowest refresh rate used when the refresh rate queue is configured for the second DDIC last time) that are carried in the second refresh rate switching instruction, the fourth queue that currently needs to be switched. However, when both the display frame rate of the APP displayed on the second display and the lowest refresh rate of the second display are carried in the second refresh rate switching instruction, the display driver directly configures, based on the display frame rate and the lowest refresh rate that are carried in the second refresh rate switching instruction, the fourth queue that currently needs to be switched.

S1304: The display driver determines a switching type of the second DDIC by using the third queue and the fourth queue that are corresponding to the second DDIC.

Specifically, after the display driver configures the corresponding second queue for the second DDIC in response to the second refresh rate switching instruction, the switching type of the switching refresh rate queue of the second DDIC this time may be determined by comparing the newly configured fourth queue with the third queue applied to the current second DDIC.

Types of the refresh rate queues included in the third queue and the fourth queue corresponding to the second DDIC may both be the first-type refresh rate queue or the second-type refresh rate queue. Therefore, the switching types may include: switching from the first-type refresh rate queue to the second-type refresh rate queue (equivalent to switching from the adaptive SEQ to the constant SEQ), and switching from the second-type refresh rate queue to the first-type refresh rate queue (equivalent to switching from the constant SQE to the adaptive SEQ). The switching from the first-type refresh rate queue to the second-type refresh rate queue means that the second DDIC switches from refreshing the image to the first display based on the refresh rate in the first-type refresh rate queue to refreshing the image to the first display based on the refresh rate in the second-type refresh rate queue. The switching from the second-type refresh rate queue to the first-type refresh rate queue means that the second DDIC switches from refreshing the image to the first display based on the refresh rate in the second-type refresh rate queue to refreshing the image to the first display based on the refresh rate in the first-type refresh rate queue.

Further, different display frame rates or the lowest refresh rate may correspond to different first-type refresh rate queues, or may correspond to different second-type refresh rate queues. Therefore, the switching types may further include switching between different first-type refresh rate queues (equivalent to switching from an adaptive SEQ to an adaptive SEQ) and switching between different second-type refresh rate queues (equivalent to switching from a constant SEQ to a constant SEQ). Switching between different first-type refresh rate queues means that the second DDIC switches from refreshing the image to the first display based on one refresh rate in the first-type refresh rate queue to refreshing the image to the first display based on the other refresh rate in the first-type refresh rate queue. Switching between different second-type refresh rate queues means that the second DDIC switches from refreshing the image to the first display based on one refresh rate in the second-type refresh rate queue to refreshing the image to the first display based on the other refresh rate in the second-type refresh rate queue.

In a case that the switching type is switching from the first-type refresh rate queue to the second-type refresh rate queue, S1305 is performed. In a case that the switching type is switching from the second-type refresh rate queue to the first-type refresh rate queue, S1306 is performed. It should be understood that an unmentioned switching type represents that there is no frame rate anomaly problem occurring during the switching.

S1305: After controlling the second DDIC to refresh a frame of image to the second display based on the 120 Hz refresh rate, the display driver controls the second DDIC to refresh the image to the second display based on the refresh rate in the fourth queue, and synchronously delivers an instruction to control the TE signal shielding function to be disabled.

Specifically, in a case of switching from the first-type refresh rate queue of the second DDIC to the second-type refresh rate queue, the TE signal shielding function (TE MASK function) needs to be enabled for the second-type refresh rate queue. Therefore, it is also required to control the TE MASK function of the second DDIC to be switched from disabled to enabled. However, different from the first DDIC, because the second DDIC is a DDIC without the TEI function, a skipping TE function is mainly implemented by means of software control of the display driver. Therefore, once the TE MASK function is disabled or enabled, the TE MASK function takes effect immediately. Therefore, if the display driver, regardless of timing, delivers the switching instruction to the second DDIC in the first two periods of the refresh rate currently used for refreshing the image by the second DDIC to control the second DDIC to switch from the first-type refresh rate queue to the second-type refresh rate queue, for a reason that enabling of the TE MASK function takes effect immediately, it is likely that a TE signal that should be reported later is shielded and cannot be reported, thereby causing a frame rate anomaly.

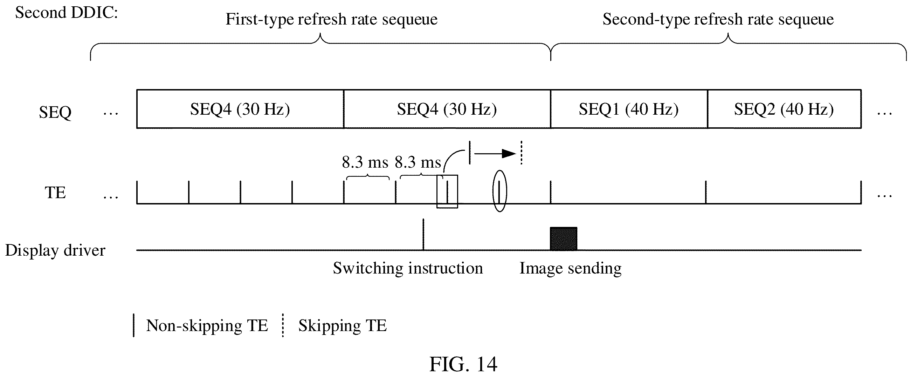

For example, referring to FIG. 14, assuming that when the current second DDIC works based on the fourth refresh rate of 30 Hz (SEQ4) in the first refresh queue, if the timing of delivering the switching instruction to the second DDIC by the display driver is within the second period of the fourth refresh rate, that is, in the second 8.3 ms of the SEQ4, all TE signals in the latter two periods are shielded (TE signals surrounded by rectangles and ellipses in FIG. 14) because the TE MASK function is enabled and takes effect immediately. However, based on a rate at which the first-type refresh rate queue reports the TE signal at 120 Hz or 60 Hz, there may be a non-skipping TE signal that originally needs to be reported. However, because enabling of the TE MASK takes effect immediately, the non-skipping TE signal that originally needs to be reported cannot be reported because of being shielded. Equivalently, the TE signal is changed from the non-skipping TE signal to the skipping TE signal, thus the frame rate anomaly problem occurs.

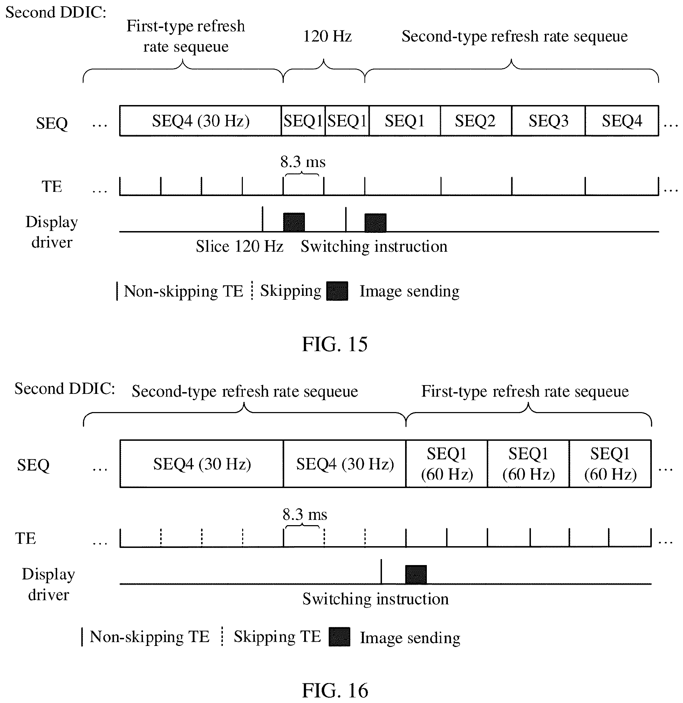

Based on this, referring to FIG. 15, if the display driver of the electronic device in the embodiment of this application needs to switch from the first-type refresh rate queue of the second DDIC to the second-type refresh rate queue, to prevent a problem that the TE signal is shielded because the TE MASK immediately takes effect, the display driver may control the second DDIC to switch the refresh rate to 120 Hz by delivering the switching instruction of 120 Hz in advance. After switching to 120 Hz is completed, the switching instruction is delivered to the second DDIC to control the second DDIC to be switched to the currently configured second-type refresh rate queue. The TE signal at 120 Hz needs to be reported. Therefore, switching to the second-type refresh rate queue is performed after 120 Hz. Even if enabling of the TE MASK function takes effects immediately, a subsequent TE signal cannot be shielded, thereby not affecting subsequent TE signal reporting.

That is, for the DDIC without the TEI function, when the SEQ configuration of the DDIC needs to be switched from the adaptive SEQ to the constant SEQ, the 120 Hz is first sliced in advance, and the current configured second-type refresh rate queue is switched based on 120 Hz.

S1306: In a last period of a refresh rate currently used for refreshing the image by the second display driver integrated circuit, the display driver controls the second display driver integrated circuit to refresh the image to the first display based on the refresh rate in the fourth queue, synchronously delivers an instruction to control the TE signal shielding function to be enabled, and reports the TE signal generated by the second display driver integrated circuit to the SF based on an actual operating frame rate of the SF.

Specifically, when the second DDIC needs to switch from the second-type refresh rate queue (constant SEQ) to the first-type refresh rate queue (adaptive SEQ), because the first-type refresh rate queue needs to disable the TE MASK function, the TE MASK function of the second DDIC needs to be controlled synchronously from being enabled to being disabled, and the TE MASK function takes effect immediately. Therefore, for a reason that the TE MASK function takes effect immediately, if the switching instruction of the display driver is not delivered to the last period of the refresh rate currently used for refreshing the image by the second DDIC, the originally shielded skipping TE signal is immediately generated and reported to the upper layer. Based on the principle that the upper layer will control the DDIC to switch back to the first refresh rate SEQ1 once image sending is recovered, if the upper layer responds to the image sending of the TE signal at this time, the period corresponding to the refresh rate currently used for refreshing the image by the second DDIC is not completed, and the frame rate anomaly occurs.

For example, referring to FIG. 16, when the second DDIC works based on the last refresh rate (SEQ4) of 30 Hz in the second refresh queue, if the timing of delivering the switching instruction to the second DDIC by the display driver is within the third period (the third 8.3 ms) of the last refresh rate SEQ4. If disabling of the TE MASK takes effect immediately, the TE signal will be sent in advance before the period corresponding to the last refresh rate is completed. In this case, if the upper layer sends the image in response to the TE signal, the upper layer is immediately switched to the first-type refresh rate queue, resulting in an abnormal 24 ms frame rate. That is, the SEQ4 in FIG. 16 should have four 8.3 ms periods. However, only three 8.3 ms periods are removed due to early switching, and a 24 ms abnormal frame occurs.

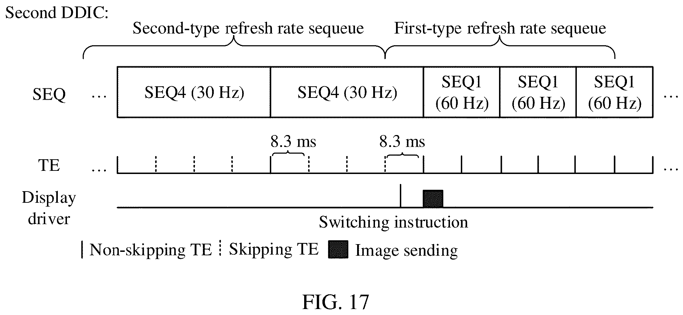

Based on this, referring to FIG. 17, to avoid a problem that the TE signal is sent in advance, when display driver delivers the switching instruction of switching from the second-type refresh rate queue to the first-type refresh rate queue to the second DDIC, the switching instruction may be delivered in the last period of the refresh rate currently used for refreshing the image, namely, in the last 8.3 ms, so as to control the second DDIC to complete the switching of the refresh rate queue in the last period and avoid the frame rate anomaly problem.

That is, for the DDIC without the TEI function, when the configuration of the refresh rate queue SEQ of the DDIC is switched from the constant SEQ to the adaptive SEQ, the switching instruction needs to be delivered in the last period of the refresh rate currently used for refreshing the image by the second DDIC to avoid occurrence of the abnormal frame.

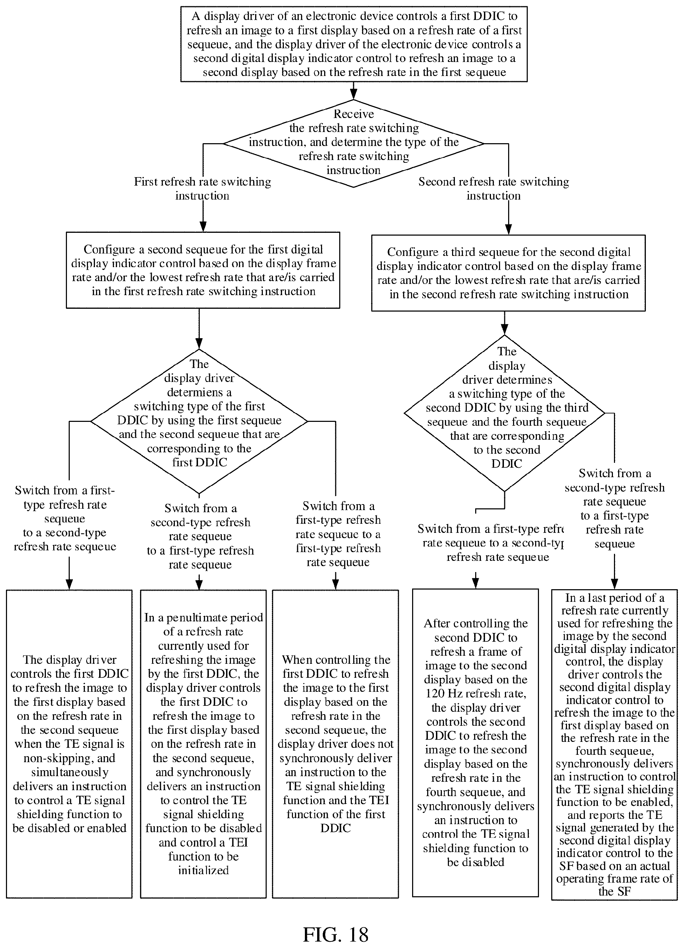

In some embodiments, for a foldable electronic device that includes both a first DDIC and a second DDIC, for example, a foldable mobile phone that includes both a first DDIC and a second DDIC, an embodiment of this application provides a refresh rate switching method, referring to FIG. 18.

For descriptions of FIG. 18, refer to descriptions of FIG. 7 and FIG. 13. Details are not described herein again. In addition, refresh rate switching instructions of different DDICs may be delivered by using different mobile industry processor interface (mobile industry processor interface, MIPI) interfaces. Further, the display driver may directly determine, based on a source interface of the refresh rate switching instruction, whether the refresh rate switching instruction corresponds to the first refresh rate switching instruction of the first DDIC or corresponds to the second refresh rate switching instruction of the second DDIC.

In conclusion, according to the refresh rate switching method provided in the embodiment of this application, a reason for generating the abnormal frame rate is specifically analyzed, and a corresponding solution is proposed based on the reason, so that the frame rate anomaly problem caused when the refresh rate queue is switched can be avoided.

In some embodiments, when the display driver controls the first DDIC to switch the refresh rate queue, in particular, in a case of switching from the first-type refresh rate queue to the first-type refresh rate queue, because types of the refresh rate queues before and after switching are the same, two refresh rate queues may be the same. Therefore, to save a specific resource, whether the two first-type refresh rate queues are the same may be further determined in a case that both the first queue and the first-type refresh rate queue of the first DDIC are the same.

When it is determined that two first-type refresh rate queues are different, the display driver controls the second DDIC to switch the refresh rate queue. In a case that two first-type refresh rate queues are the same, after recording the currently changed display frame rate and/or the lowest refresh rate, the display driver directly ends the switching process. The recorded display frame rate and/or the lowest refresh rate are used for next refresh rate switching.

Another embodiment of this application provides an electronic device. The electronic device includes a memory, a first display, a first display driver integrated circuit, and one or more processors. The memory, the first display, and the first display driver integrated circuit are coupled to the processor. The memory stores one or more computer programs. When the processor executes the computer program, the electronic device is enabled to perform the refresh rate switching method in any one of the embodiments. Specifically, the first display driver integrated circuit corresponds to the first display, and is configured to refresh, based on control of the processor, the image to the first display based on a refresh rate in a first queue or a second queue. The display driver in the embodiment of this application may be software code or a software module that runs in the processor. A structure of the electronic device may refer to a structure of the electronic device 100 shown in FIG. 5. In some embodiments, the electronic device may further include a second display and a second display driver integrated circuit. The second display and the second display driver integrated circuit are coupled to the processor. Specifically, the second display driver integrated circuit corresponds to the second display, and is configured to refresh, based on control of the processor, the image to the second display based on a refresh rate in a third queue or a third queue.

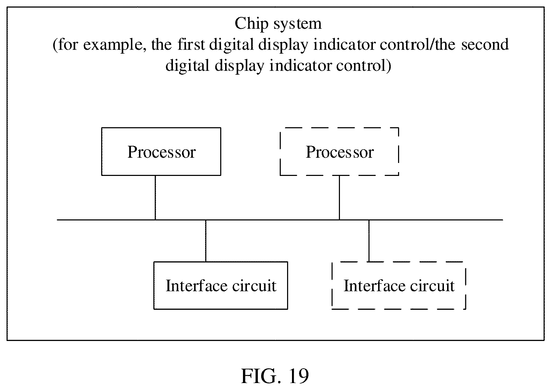

Another embodiment of this application further provides a chip system. The chip system may include the first display driver integrated circuit. As shown in FIG. 19, the chip system includes at least one processor and at least one interface circuit. The processor and the interface circuit may be interconnected through a line. For example, the interface circuit may be configured to receive a signal from another apparatus (for example, a memory of an electronic device and a processor of the electronic device). For another example, the interface circuit may be configured to send a signal (for example, refresh an image to a first display of the electronic device) to another apparatus (for example, a display of the electronic device). For example, the interface circuit may read an instruction stored in the memory and send the instruction to the processor of the chip system. When the instruction is executed by the processor of the chip system, the electronic device may be cooperated with to execute the embodiment to refresh the image to the first display of the electronic device based on the refresh rate in the first queue or the second queue. Certainly, the chip system may further include another discrete component. This is not specifically limited in the embodiment of this application.

Another embodiment of this application provides another chip system. The chip system may include the second display driver integrated circuit. As shown in FIG. 19, the chip system includes at least one processor and at least one interface circuit. The processor and the interface circuit may be interconnected through a line. For example, the interface circuit may be configured to receive a signal from another apparatus (for example, a memory of an electronic device and a processor of the electronic device). For another example, the interface circuit may be configured to send a signal (for example, refresh an image to a second display of the electronic device) to another apparatus (for example, a display of the electronic device). For example, the interface circuit may read an instruction stored in the memory and send the instruction to the processor of the chip system. When the instruction is executed by the processor of the chip system, the electronic device may be cooperated with to execute the embodiment to refresh the image to the second display of the electronic device based on the refresh rate in the third queue or the fourth queue. Certainly, the chip system may further include another discrete component. This is not specifically limited in the embodiment of this application.

Another embodiment of this application further provides a computer-readable storage medium. The computer-readable storage medium stores a computer program thereon. When the computer program is executed by a processor in an electronic device, the electronic device is enabled to implement the image display method according to any one of the embodiments.

An embodiment of this application further provides a computer program product. When the computer program product runs on a computer, the computer is enabled to perform functions or steps of the method in the embodiments.

It can be clearly learned by a person skilled in the art from the descriptions of the implementations that for convenience and brevity of description, only division into the functional modules is used as an example for description. In actual application, the functions may be allocated to different functional modules for implementation based on a requirement, that is, an internal structure of an apparatus is divided into different functional modules, to complete all or some of the functions described above.

In the several embodiments provided in this application, it should be understood that the disclosed apparatus and method may be implemented in another manner. For example, the described apparatus embodiment is merely an example. For example, the division into the modules or units is merely logical function division, and there may be another division manner in actual implementation. For example, a plurality of units or components may be combined or integrated into another apparatus, or some features may be ignored or not performed. In addition, the displayed or discussed mutual couplings, direct couplings, or communication connections may be implemented by using some interfaces. The indirect couplings or communication connections between the apparatuses or units may be implemented in an electrical form, a mechanical form, or another form.

The units described as separate parts may or may not be physically separate, and parts displayed as units may be one or more physical units, may be located in one place, or may be distributed in a plurality of different places. Some or all of the units may be selected based on actual requirements to achieve the objectives of the solutions in the embodiments.

In addition, the functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions in the embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods in the embodiments of this application. The storage medium includes various media that can store program code, for example, a USB flash drive, a removable hard disk, a read-only memory (read only memory, ROM), a random access memory (random access memory, RAM), a magnetic disk, or an optical disc.

The content is merely specific implementations of this application, but is not intended to limit the protection scope of this application. Any variation or replacement made within the technical scope disclosed in this application shall fall within the protection scope of this application. Therefore, the protection scope of this application shall be subject to the protection scope of the claims.

## Claims

1. A refresh rate switching method, applied to an electronic device, wherein the electronic device comprises a first display, and a first display driver integrated circuit corresponding to the first display; and the method comprises:
controlling, by a display driver of the electronic device, the first display driver integrated circuit to refresh an image to the first display based on a refresh rate of a first queue; wherein the first queue is a first-type refresh rate queue or a second-type refresh rate queue, the first-type refresh rate queue is a refresh rate queue that comprises at least two refresh rates distributed from high to low, and the second-type refresh rate queue is a refresh rate queue in which a last refresh rate has a refresh rate value and a refresh rate before the last refresh rate is null;
receiving, by the display driver of the electronic device, a first refresh rate switching instruction, wherein a display frame rate of an APP displayed on the first display and/or a lowest refresh rate of the first display are/is carried in the first refresh rate switching instruction;
configuring a second queue for the first display driver integrated circuit based on the display frame rate and/or the lowest refresh rate that are/is carried in the first refresh rate switching instruction; wherein the second queue is the first-type refresh rate queue or the second-type refresh rate queue; and
if the first queue is the first-type refresh rate queue and the second queue is the second-type refresh rate queue, controlling the first display driver integrated circuit to refresh the image to the first display based on a refresh rate in the second queue before a non-skipping TE signal, and synchronously delivering an instruction to control a TE signal shielding function to be enabled; wherein the non-skipping TE signal is a TE signal that has been reported to an SF.

2. The method according to claim 1, wherein the method further comprises:
if the first queue is the second-type refresh rate queue and the second queue is the first-type refresh rate queue, in a penultimate period of a refresh rate currently used for refreshing the image by the first display driver integrated circuit, controlling, by the display driver, the first display driver integrated circuit to refresh the image to the first display based on the refresh rate in the second queue, and synchronously delivering an instruction to control the TE signal shielding function to be disabled and control a TEI function to be initialized.

3. The method according to claim 1, wherein the method further comprises:
if the first queue is the first-type refresh rate queue and the second queue is the first-type refresh rate queue, when controlling the first display driver integrated circuit to refresh the image to the first display based on the refresh rate in the second queue, not synchronously delivering, by the display driver, an instruction to the TE signal shielding function and a TEI function of the first display driver integrated circuit.

4. The method according to claim 3, wherein the if the first queue is the first-type refresh rate queue and the second queue is the first-type refresh rate queue, when controlling the first display driver integrated circuit to refresh the image to the first display based on the refresh rate in the second queue, not synchronously delivering, by the display driver, an instruction to the TE signal shielding function and a TEI function of the first display driver integrated circuit comprises:
if the first queue is the first-type refresh rate queue and the second queue is the first-type refresh rate queue, after determining that the first queue and the second queue are not the same, controlling, by the display driver, the first display driver integrated circuit to refresh the image to the first display based on the refresh rate in the second queue, and not synchronously delivering the instruction to the TE signal shielding function and the TEI function of the first display driver integrated circuit.

5. The method according to any one of claims 1 to 3, wherein the electronic device further comprises a second display, and a second display driver integrated circuit corresponding to the second display; and the method further comprises:
controlling, by the display driver of the electronic device, the second display driver integrated circuit to refresh an image to the second display based on a refresh rate in a third queue; wherein the third queue is the first-type refresh rate queue or the second-type refresh rate queue;
receiving, by the display driver of the electronic device, a second refresh rate switching instruction, wherein a display frame rate of an APP displayed on the second display and/or a lowest refresh rate of the second display are/is carried in the second refresh rate switching instruction;
configuring the fourth queue for the second display driver integrated circuit based on the display frame rate and/or the lowest refresh rate that are/is carried in the second refresh rate switching instruction, wherein the fourth queue is the first-type refresh rate queue or the second-type refresh rate queue; and
if the third queue is the first-type refresh rate queue and the fourth queue is the second-type refresh rate queue, after controlling the second display driver integrated circuit to refresh a frame of image to the second display based on a 120 Hz refresh rate, controlling the second display driver integrated circuit to refresh the image to the second display based on a refresh rate in the fourth queue, and synchronously delivering an instruction to control the TE signal shielding function to be enabled.

6. The method according to claim 5, wherein the method further comprises:
if the third queue is the second-type refresh rate queue and the fourth queue is the first-type refresh rate queue, in a last period of a refresh rate currently used for refreshing the image by the second display driver integrated circuit, controlling, by the display driver, the second display driver integrated circuit to refresh the image to the first display based on the refresh rate in the fourth queue, synchronously delivering an instruction to control the TE signal shielding function to be disabled, and reporting a TE signal generated by the second display driver integrated circuit to the SF based on an actual operating frame rate of the SF.

7. The method according to any one of claims 1 to 6, wherein the first display driver integrated circuit is a display driver integrated circuit with the TEI function.

8. The method according to either of claims 5 and 6, wherein the second display driver integrated circuit is a display driver integrated circuit without the TEI function.

9. An electronic device, comprising a memory, a first display, a first display driver integrated circuit, and one or more processors; wherein the memory, the first display, and the first display driver integrated circuit are coupled to the processor; the memory stores one or more computer program codes, the computer program code comprising a computer instruction; when the processor executes the computer instruction, the electronic device is enabled to execute the refresh rate switching method according to any one of claims 1 to 8; and
specifically, the first display driver integrated circuit corresponds to the first display, and is configured to refresh, based on control of the processor, an image to the first display based on a refresh rate in a first queue or a second queue.

10. The electronic device according to claim 9, wherein the electronic device further comprises a second display and a second display driver integrated circuit; the second display and the second display driver integrated circuit are coupled to the processor; and
the second display driver integrated circuit corresponds to the second display, and is configured to refresh, based on control of the processor, an image to the second display based on a refresh rate in a third queue or a third queue.

11. A computer-readable storage medium, storing a computer program thereon, wherein when the computer program is executed by a processor of an electronic device, the electronic device is enabled to execute the refresh rate switching method according to any one of claims 1 to 8.

12. A computer program product, wherein when the computer program product is running on an electronic device, the electronic device is enabled to execute the refresh rate switching method according to any one of claims 1 to 8.
